**Europäisches Patentamt**

**European Patent Office**

**Office européen des brevets**

(19)

(11) Veröffentlichungsnummer: **0 080 681**
**B1**

(12) # EUROPÄISCHE PATENTSCHRIFT

(45) Veröffentlichungstag der Patentschrift:
**06.08.86**

(21) Anmeldenummer: **82110773.7**

(22) Anmeldetag: **22.11.82**

(51) Int. Cl.⁴: **H 04 Q 3/52,** G 02 F 1/29,
H 04 B 9/00

(54) **Steueranordnung zur Steuerung eines Lichtschalters für optische Signale.**

(30) Priorität: **27.11.81 DE 3147109**
**23.12.81 DE 3151209**
**11.06.82 DE 3221945**

(43) Veröffentlichungstag der Anmeldung:
**08.06.83 Patentblatt 83/23**

(45) Bekanntmachung des Hinweises auf die Patenterteilung:
**06.08.86 Patentblatt 86/32**

(84) Benannte Vertragsstaaten:
**AT CH DE FR GB IT LI NL SE**

(56) Entgegenhaltungen:
**GB - A - 2 013 359**
**GB - A - 2 050 116**

**ELECTRONICS LETTERS, Band 12, Nr. 22, 28. Oktober 1976, LONDON (GB), R.V. SCHMIDT et al.:
"Experimental 4X4 optical switching network", Seiten 575-577**

(73) Patentinhaber: **Siemens Aktiengesellschaft Berlin und München, Wittelsbacherplatz 2, D-8000 München 2 (DE)**

(72) Erfinder: **Wiedeburg, Klaus, Dr., Veilchenstrasse 7, D-8039 Puchheim (DE)**

### Beschreibung

Die Erfindung betrifft eine spezielle optoelektronische Anordnung, nämlich die im Oberbegriff des Patentanspruchs 1 angegebene spezielle Steueranordnung für einen oder mehrere Lichtschalter.

Die Erfindung wurde insbesondere zur Steuerung einer Vielzahl von Lichtschaltern entwickelt, welche auf einem einzigen ersten Substrat in integrierter Technik hergestellt sind und insbesondere als Koppelpunkte eines Koppelfeldes mit rein optischen Zwischenleitungen in einem Fernsprech-Vermittlungssystem dienen sollen. Die Erfindung ist jedoch darüber hinaus auch auf anderen technischen Anwendungsgebieten einsetzbar, z.B. zur Steuerung von Lichtschaltern in der Rechnertechnik und in sonstigen, Signale übertragenden bzw. verarbeitenden Systemen und Geräten, vor allem falls jedem der verschiedenen Lichtschalter individuell, z.B. durch Herstellungstoleranzen bedingte, anders grosse elektrische Steuerspannung von präzise eingestellter Amplitude zugeleitet werden muss.

Elektrisch steuerbare Lichtschalter sind an sich verschieden aufbaubar, vor allem je nach der Art der Durchschaltung. In als Richtungskoppler aufgebauten Lichtschaltern werden durch spannungsabhängige Lichtgeschwindigkeitsänderungen die entsprechend mitgeänderten Übersprech-Kopplungen zwischen zwei meistens eng benachbart und parallel verlaufenden Lichtleitungen zur direkten oder kreuzweisen Durchschaltung beider Lichtleitungen ausgenutzt. Endet die zweite parallele Lichtleitung in einem lichtabsorbierenden Lichtsumpf, dann wirkt dieser Richtkoppler wie ein der Kerr-Zelle ähnlicher Lichtschalter mit, von aussen betrachtet, nur einer einzigen Lichtleitung als Signalausgang. Ausserdem gibt es z.B. den Richtungskopplern ähnliche steuerbare Lichtgabeln zur Schaltung der Signale zum einen oder anderen Gabelausgang. Solche Lichtschalter enthalten jeweils eine oder mehrere elektrisch leitende Elektroden zur Steuerung der Durchschaltung.

Solche Lichtschalter und deren Steueranordnung, die im Oberbegriff des Patentanspruchs 1 angegeben ist, sind bereits durch eine Vielzahl von Literaturstellen bekannt, wobei dort die Lichtschalter vorzugsweise auf GaAs-Basis oder LiNbO₃-Basis in integrierter Technik hergestellte Richtungskoppler sind, und wobei dort die Steueranordnung im wesentlichen nur durch ein, häufig regelbares, Gleichspannungs-Netzgerät gebildet wird und jeweils nur einen einzigen Lichtschalter steuert, vgl. z.B. die Lichtschalter und deren Steueranordnung in

(1) Electronics Letters 10 (21. Febr. 1974) Nr. 4, 41 bis 43
(2) Electronics Letters 12 (2. Sept. 1977) Nr. 18, 459/460
(3) Electronics Letters 12 (28. Okt. 1976) Nr. 22, 575 bis 577.
(4) Appl. Phys. Lett. 25 (15. Okt. 1974) Nr. 8, 458 bis 460
(5) Appl. Phys. Lett. 25 (15. Nov. 1974) Nr. 10, 561/562

(6) Appl. Phys. Lett. 27 (15. Aug. 1975) Nr. 4, 202 bis 205
(7) Appl. Phys. Lett. 27 (1. Sept. 1975) Nr. 5, 289 bis 291
(8) Appl. Phys. Lett. 28 (1. Mai 1976) Nr. 9, 503 bis 506
(9) Appl. Phys. Lett. 31 (15. Aug. 1977) Nr. 4 266/ 267
(10) IEEE J. of Quant. El. QE-12 (Juli 1976) Nr. 7 396 bis 401
(11) Integr. Optics. Salt-Lake City Utah (12. bis 14. Jan. 1976) MA4-1 bis MA4-3.

Eine Vielzahl solcher, auf einem bzw. auf mehreren Substraten angebrachter Lichtschalter können also als Koppelpunkte eines Koppelfeldes mit rein optischen Zwischenleitungen in einem Fernsprech-Vermittlungssystem dienen, worauf insbesondere bereits in den obengenannten Schriften (1) und (3) hingewiesen ist. Solche Lichtschalter können in äquivalenter Weise häufig 2 × 2-Schalter in Koppelfeldern für rein elektrische Signale statt für optische Signale ersetzen, nämlich Schalter, die für sich vorbekannt sind z.B. durch

(12) US 3 638 193
(13) US 3 593 295
(14) DE-OS 1 922 891
(15) DE-AS 2 036 128
(16) DE-AS 2 036 176
(17) DELL-System Techn. J. Mai–Juni 1968, 813 bis 822.

Daneben ist bereits bekannt, die obengenannten Lichtschalter durch Steueranordnungen zu steuern, die Transistoren bzw. Dioden auf dem ersten oder auf einem zweiten Substrat enthalten vgl. z.B.

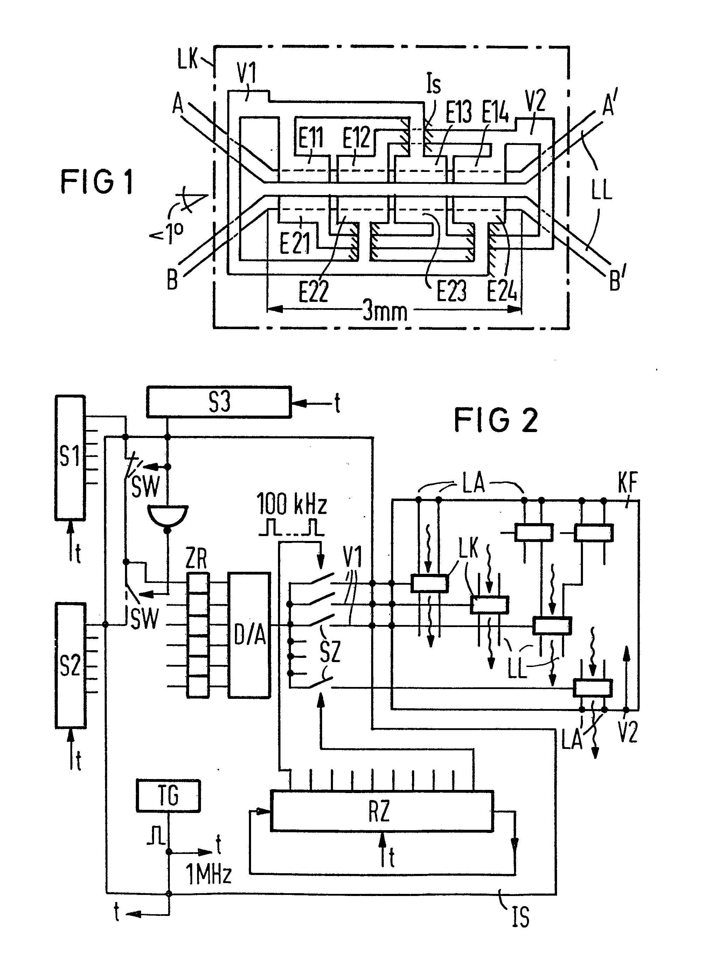

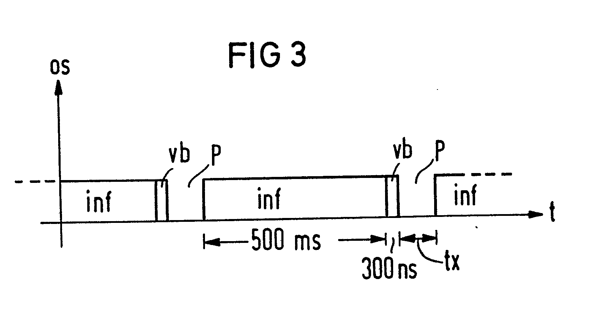

(18) Optics Letters 2 (Febr. 1978) Nr. 2, 45 bis 47, insbesondere 45, linke Spalte, Abs. 2
(19) Appl. Phys. Lett. 37 (15. Juli 1980) Nr. 2, 195 bis 197, insbesondere 195, linke Spalte, Abs. 3 und Fig. 2 – in Fig. 2 ist ein Substratblock gezeigt, welcher teils ein erstes LiNbO₃-Substrat über einem zweiten Si-Substrat für eine Diode hat.
(20) 6th ECOC (Europäan Conference on Optical Communication, University York, United Kingdom, 16. bis 19. Sept. 1980, IEE Public. Nr. 190, S. 252 bis 255, insbesondere S. 252, Abs. 1 und Fig. 3.
(21) IEEE J. of QUANT. EL. QE-16, (Apr. 1980) Nr. 4, 390/391, insbesondere Fig. 1 – diese Figur zeigt einen Substratblock mit einem FET auf einem zweiten GaAs-Substrat und einen Laser bzw. eine Lichtleitung in einem ersten GaAs-Substrat, wobei das erste und das zweite Substrat einen gemeinsamen Substratblock bilden.

Es ist auch bereits bekannt, ein erstes GaAs-Substrat mit Lichtleitungen auf einer SiO₂-Schicht zu erzeugen, vgl.

(22) Electronics (2. Juni 1981), 33, Abs. 3.

Solche optoelectronischen Lichtschalter haben den oft störenden Nachteil, dass die Steuerspannung bzw. die Steuerpotentiale der Steuerspannung häufig sehr präzis, z.B. auf 1‰ genau, eingestellt sein müssen, um einen optimalen Betrieb zu erhalten. Wird nämlich die Steuerspannung nicht genügend präzis eingestellt, dann ist entweder die Nebensprechdämpfung zwischen verschiedenen Lichtleitern des Lichtschalters und evtl. des ganzen ersten Substrats ungünstig, oder sonstige Dämpfungen innerhalb der Lichtleitungen sind ungünstig. Besonders für die Verwendung solcher Lichtschalter als Koppelpunkte eines Fernsprech-Vermittlungssystems mit rein optischen Zwischenleitungen müssen aber äusserst hohe Anforderungen an die Nebensprechdämpfung einerseits und an die Durchgangsdämpfung andererseits der Lichtleitungen gestellt werden.

Wegen der integrierten Herstellungstechnik und der damit verbundenen relativ grossen Herstellungstoleranzen, insbesondere für die Lichtleitungen, ist aber die jeweils zur optimalen Steuerung nötige präzise Grösse der Steuerspannung von Fall zu Fall recht unterschiedlich. Die wirklich optimale Grösse der Steuerpotentiale für jeden der Lichtschalter auf einem solchen ersten Substrat ist nur von Fall zu Fall durch Messungen zu ermitteln, wobei im späteren Betrieb für jeden Lichtschalter von vielen, auf demselben ersten Substrat angebrachten Lichtschaltern, jeweils verschieden grosse Steuerpotentiale günstig, also optimal sind.

Die Erfindung löst die Aufgabe, trotz der Unterschiede der Grösse der optimalen Steuerpotentiale für die Lichtschalter, im Betrieb individuell sehr präzise eingestellte Steuerpotentiale zur Steuerung des jeweils betreffenden Lichtschalters in für technische Anwendungen sehr zweckmässiger Weise zur Verfügung zu stellen. Die Erfindung gestattet daher insbesondere, die Ausschussquote bei der Herstellung von Lichtschaltern dadurch stark zu reduzieren, dass die Erfindung eine spezielle Grösse innerhalb eines weiten Bereiches von an sich möglichen Steuerspannungsgrössen jeweils präzise schnell und leicht reproduzierbar zur Verfügung zu stellen gestattet. Durch die Verringerung der Ausschussquote bietet die Erfindung zusätzlich überhaupt erst eine wirtschaftlich reelle Chance zur Herstellung solcher Lichtschalter und ihrer Steueranordnung, insbesondere für den intensiven Einsatz derselben in Koppelfeldern von Fernsprech-Vermittlungssystemen.

Die Erfindung löst diese Aufgabe, indem die im Oberbegriff des Patentanspruchs 1 genannte Steueranordnung für Lichtschalter gem. den im Kennzeichen des Patentanspruchs 1 angegebenen Merkmalen weitergebildet wird.

Die in den Unteransprüchen angegebenen zusätzlichen Massnahmen gestatten zusätzliche Vorteile. So gestattet die Massnahme gemäss Patentanspruch

2, Richtungskoppler, die in bekannter Weise zwei verschiedene Steuerpotentiale pro Steuerelektrode benötigen, nämlich ein erstes zur direkten und ein zweites zur kreuzweisen Durchschaltung, mit jeweils präzise eingestellten Steuerspannungen sowohl bei direkter als auch bei kreuzweiser Durchschaltung zu betreiben;

3, bei Verwendung des im Patentanspruch 2 angegebenen speziellen Lichtschalters, insbesondere für ein Koppelfeld, in selbsttätiger Weise bedarfsentsprechend jeweils die direkte oder kreuzweise Durchschaltung einzustellen;

4, besonders rasch die Umwandlung des Wortes in einen Analogwert durchführen zu können, insbesondere indem die verschiedenen Digits des Wortes in paralleler statt serieller Weise der Digitaleingangsseite des Wandlers zugeführt werden;

5, eine Vielzahl von Lichtschaltern mittels eines einzigen Wandlers, der insbesondere gemäss Patentanspruch 4 besonders schnell betrieben sein kann, mit optimalen Steuerpotentialen bzw. Steuerspannungen zu beliefern;

6, die Selbstentladung der Elektroden des Lichtschalters unschädlich zu machen;

7, mit einem minimalen Aufwand das zweite Steuerpotential der verschiedenen Steuerspannungen über eine einzige Anschlussklemme mit besonders wenig Aufwand zuleiten zu können;

8, auch der zweiten Steuerelektrode des Lichtschalters individuell jeweils ein für sie optimales Steuerpotential präzise, schnell und leicht zuzuführen;

9, einen besonders hohen Integrationsgrad und damit besonders wenige, zu verlötende oder sonstwie zu verbindende Aussenanschlüsse zu ermöglichen;

10, eine sowohl hinsichtlich der elektrischen Steueranordnung als auch hinsichtlich der optoelektronischen Signaldurchschaltung besonders schnelle Anordnung zur Verfügung zu stellen;

11, mittels heterogener Technik eine relativ schnelle, rein elektrische Steueranordnung mit besonders dämpfungsarmen optoelektronischen Lichtleitern zu kombinieren;

12, sowohl die Fertigung als auch den späteren Betrieb der Steueranordnung bei heterogenem Substratblock möglichst einfach durchführen zu können; sowie

13, in besonders einfacher Weise, trotz nahezu beliebig grosser Streuung der durch Herstellungstoleranzen bedingten Eigenschaften des Wandlers, eine präzise Einstellung der Steuerspannungen durch entsprechende vorherige, z.B. einmalige, Justierung zu erreichen;

14, die oft recht rasche Alterung der Kennlinien der Lichtschalter rückgängig bzw. unschädlich machen zu können;

15, die Synchronisation der Polaritätsumkehrungen bei allen Koppelpunkten der Verbindungswege sicherzustellen, selbst wenn sie auf eine Vielzahl von Substraten verteilt sind und selbst wenn eine Vielzahl getrennt arbeitender Feldgeneratoren die Felder an den jeweils betreffenden Elektroden erzeugen;

16, diese Synchronisation mit besonders wenig Hardware-Aufwand bei der Steuerung der Feldgeneratoren zu ermöglichen;

17, eine besonders präzise rasche einfache Belieferung der Elektroden der verschiedenen Koppelpunkte mit den betreffenden Potentialen, deren optimale Höhe von Koppelpunkt zu Koppelpunkt wegen Herstellungstoleranzen jeweils verschieden gross ist, zu ermöglichen;

18, eine noch präzisere Kompensation, bzw. Beseitigung, der Alterung der Koppelpunkte zu ermöglichen;

19, diese Kompensation weiter zu verbessern;

20, die Dauer der Pause anders als die Dauer der Übertragung zu wählen;

21, auch die «Pause» zur nebensprecharmen Übertragung von mit Informationen modulierten Signalen auszunutzen;

22, den Umpolungsbefehl leicht aus der Folge von optischen Signalen unabhängig vom Code dieser Signale erkennen zu können;

23, durch die Verwendung verschiedener Lichtblitze für die Hinumpolung und Rückumpolung die Dauer der beiden Umpolungsphasen verschieden gross wählen zu können, insbesondere von Lichtblitz zu Lichtblitz jeweils verschieden gross wählen zu können; dies ist insbesondere günstig in Verbindung mit den in Patentanspruch 19 angegebenen speziellen Massnahmen, um durch Änderung der Dauer der Umpolungsphasen, synchronisiert durch die Lichtblitze, die Dämpfung der Lichtschalter in ihrer nicht-durchgeschalteten Richtung besonders hoch einregeln zu können;

24, eine Verstümmelung der Informationen, welche in den auf den Lichtblitz folgenden Zeitkanälen übertragen werden, zu vermeiden;

25, in besonders einfacher Weise die Lichtblitze einzukoppeln; und

26, auf besonders einfache Weise den Lichtblitz, d.h. den Umpolungsbefehl aus der Folge von sämtlichen übertragenen optischen Signalen rasch und zuverlässig erkennen zu können.

Die Erfindung wird anhand der in den Figuren gezeigten Beispiele näher erläutert, wobei

Fig. 1 ein Ausführungsbeispiel eines als Richtungskoppler ausgebildeten, durch den Stand der Technik bekannten Lichtschalters, sowie

Fig. 2 ein Ausführungsbeispiel der erfindungsgemässen Steueranordnung, insbesondere bei der Verwendung zur Steuerung einer Vielzahl von Lichtschaltern in einem Koppelfeld eines Fernsprech-Vermittlungssystems,

Fig. 3 Folgen von Blöcken von modulierten optischen Signalen,

Fig. 4 schematisch ein einfaches Beispiel für die übertragenen optischen Signale zusammen mit durch Lichtblitze gebildeten Umpolungsbefehlen und

Fig. 5 ein Anwendungsbeispiel eines Koppelfeldes eines Vermittlungssystems skizzenhaft zeigen.

In Fig. 1 ist ein als Richtungskoppler aufgebauter bekannter Lichtschalter LK mit zwei Lichtleitungen LL bzw. A–A'; B–B' gezeigt. Er enthält in diesem Fall auf ca. 3 mm Länge dicht benachbarte und parallel angeordnete Lichtleitungen LL, sowie acht elektrisch steuerbare Elektroden E11...E24. Letztere sind paarweise angeordnet und hintereinander über dem parallelen Abschnitt der Lichtleitungen LL angebracht, sowie jeweils abwechselnd vom ersten Steuerungspotential V1 und vom zweiten Steuerungspotential V2 gesteuert. Isolierschichten Is trennen räumlich die elektrisch leitenden Zuleitungen der Steuerpotentiale V1 von den Zuleitungen der Steuerpotentiale V2. In für sich bekannter Weise beeinflussen diese Steuerpotentiale V1, V2 die Lichtgeschwindigkeit in den Lichtleitungen LL. Bei speziellen Werten der Steuerpotentiale V1, V2 bzw. der Steuerspannung V1/V2 findet eine Kreuzkopplung statt, bei der Signale von A zu B' und von B zu A' kreuzweise so durchgeschaltet sind, dass in direkter Richtung, d.h. von A nach A' und von B zu B', hohe Dämpfungen eintreten. Je nach den Zufällen während der Herstellung dieses Lichtschalters LK sind die präzisen optimalen Grössen der Steuerpotentiale V1 und V2, bei denen jeweils eine kreuzweise Durchschaltung mit hoher Dämpfung in direkter Richtung und bei denen eine direkte Durchschaltung bei hoher Dämpfung in kreuzweiser Richtung eintritt, von Lichtschalter LK zu Lichtschalter LK deutlich, z.B. um 1% und viel mehr, unterschiedlich, jedenfalls wenn man an hoher Dämpfung in der unerwünschten Durchschalterichtung und niedriger Dämpfung in der erwünschten Durchschalterichtung sehr interessiert ist.

Es handelt sich hier also um einen speziellen, in integrierter Technik hergestellten Richtungskoppler LK für optische, in mindestens einer Lichtleitung LL geführte Signale. Der Lichtschalter LK ist auf einem ersten Substrat angebracht, das z.B. in für sich bekannter Weise aus GaAs oder aus $LiNbO_3$ besteht. An der Lichtleitung ist zum Steuern des Lichtschalters LK jeweils mindestens eine elektrisch steuerbare, elektrisch leitende Elektrode, vgl. E11...E24, angebracht. Gesteuert vom Steuerpotential, hier V1 und V2, an Elektroden wird das in der betreffenden Lichtleitung LL geführte Licht direkt von A zu A' beziehungsweise von B zu B' durchgeschaltet oder kreuzweise zwischen den Lichtleitungen LL ausgetauscht, d.h. von A zu B' bzw. B zu A', durchgeschaltet. Bei der Erfindung kann aber jeder andere, eine Steuerelektrode enthaltende Lichtschalter zur Schaltung von optischen, in einer Lichtleitung geführte Signale verwendet sein.

Die Erfindung löst das Problem, präzise Steuerspannungen bzw. Steuerpotentiale V1, V2, je nach dem Bedarf des jeweiligen Lichtschalters LK, auf z.B. 1 mV genau, in solcher Weise der Elektrode bzw. den Elektroden E11...E14 zuzuführen, dass auch im rauhen schnellen Betrieb, z.B. innerhalb eines Fernsprech-Vermittlungssystems, wahlweise eine niedrige Dämpfung in der gewünschten Durchschalterichtung, und vor allem wahlweise eine hohe Dämpfung in einer nicht gewünschten Durchschalterichtung zum Sperren dieser Durchschalterichtung gesichert ist – obwohl die nötige, z.B. auf 1 mV genaue, optimale Grösse des Steuerpotentials V1 und/oder V2 von Lichtschalter zu Lichtschalter deutlich jeweils Unterschiede von z.B. enigen 100 mV aufweist. Ein solcher Lichtschalter LK weist also zwei optische Signaleingänge A, B und zwei optische Signalausgänge A', B' auf.

Figur 2 zeigt eine erfindungsgemässe Variante der Steueranordnung, welche die betreffenden Steuerspannungen V1, V2 rasch mit hoher Präzision und individuell justiert für den jeweils betreffenden Lichtschalter LK mittels des D/A-Wandlers D/A und mittels mindestens eines den Wandler D/A betreibenden Speichers S1/S2/S3 liefert.

Bei dem in Fig. 2 gezeigten Beispiel sind auf dem ersten Substrat KF nicht nur ein Lichtschalter LK mit je zwei optischen Signaleingängen und zwei optischen Signalausgängen, sondern eine Vielzahl solcher Lichtschalter LK angebracht. Diese Lichtschalter LK sind, zum Teil in Serie zum Teil parallel, in Lichtleitungen LL eingefügt, so dass bei dieser Variante das erste Substrat KF einen Abschnitt eines Koppelfeldes eines Vermittlungssystems darstellen kann. Die Anschlüsse LA, welche optische Signale zuführen und/oder wegführen, stellen daher Eingänge und/oder Ausgänge dieses Koppelfeldabschnittes KF dar. Alle diese Lichtschalter LK werden bei diesem Beispiel von einer einzigen Steueranordnung gesteuert.

Auf einem zweiten eigenen Substrat IS ist die zugehörige Steueranordnung S1, S2, S3, SW, ZR, D/A, SZ, RZ, TG angebracht – oder wenigstens ein Teil dieser Steueranordnung, vor allem D/A, aber auch z.B. SW, ZR, SZ, RZ, TG wie in Fig. 1. Dieses zweite Substrat mit (Teilen) der Steueranordnung kann, wie unten erläutert, jedoch auch identisch mit dem ersten Substrat KF sein, so dass in diesem Sonderfall beide Substrate KF/IS einen einzigen homogenen oder heterogenen Substratblock statt zweier getrennter, über äussere Leitungen verbundener Substrate darstellen. Auf dem zweiten Substrat IS ist erfindungsgemäss nämlich der D/A-Wandler D/A in integrierter Technik angebracht, welcher hinsichtlich seiner analogen Ausgangsspannung gegen Gleichspannungsversorgungs-Schwankungen stabilisiert ist. Unabhängig von solchen Schwankungen liefert also der Wandler D/A präzise analoge Steuerpotentiale V1 und V2 an die Elektrode des jeweils angesteuerten Lichtschalters LK.

Die Analogausgangsseite des Wandlers D/A ist in diesem Beispiel mit den Elektroden E11...E24 der verschiedenen Lichtschalter LK über zyklisch betätigte Zwischenschalter SZ elektrisch leitend verbunden. Dazu werden die Zwischenschalter SZ, z.B. mit 100 kHz, zyklisch nacheinander kurzzeitig mittels des, z.B. 1 MHz-Impulsfolgen erzeugenden, Taktgenerators TG und des Schieberegisters bzw. Ringzählers RZ leitend gesteuert. Auf diese Weise kann der Wandler D/A nicht nur einen einzigen, sondern viele, z.B. zehn, Lichtschalter LK mit Steuerpotentialen V1 und/oder V2 beliefern.

Die Digitaleingangsseite des Wandlers D/A ist zur Steuerung der hier vielen Lichtschalter LK mit einem mindestens einen Speicher enthaltenden Byte-Generator – hier mit drei Speichern S1/S2/S3 mit Zwischenregister ZR, Taktgenerator TG und Ringzähler bzw. Schieberegister RZ – verbunden. Dieser Byte-Generator liefert im Betrieb aus Digits gebildete Wörter an die Digitaleingangsseite des Wandlers D/A. Aus einem solchen Wort kann der gegen Störungen unempfindliche Wandler D/A präzise und rasch jene analogen Steuerpotentiale V1 und/oder V2 erzeugen, welche den jeweils angesteuerten betreffenden Lichtschalter LK, individuell für diesen bestimmt, mit entsprechend hoher Präzision steuern. Es ist günstig, hierbei einen solchen Code für diese Wörter zu verwenden, der in möglichst kleinen Sprüngen die optimale Grösse des Steuerpotentials V1 bzw. V2 an der Elektrode einzustellen gestattet, wobei häufig eine lineare Kodierung d.h. gleichmässige Quantisierung (uniform quantizing) hir oft besser als eine logarithmische Kodierung (non-uniform quantizing) ist. Diese analoge Ausgangsspannung des Wandlers D/A stellt dann jeweils die Steuerspannung bzw. das Steuerpotential V1 und/oder V2 dar, welches einem der Lichtschalter LK jeweils individuell, seinem Bedarf entsprechend, zugeführt wird. Im Speicher des Byte-Generators, hier in den Speichern S1/S2, sind im gezeigten Beispiel viele solcher Wörter gespeichert, die, nacheinander gelesen, in dem Zwischenregister ZR zwischengespeichert werden, so dass in besonders zeitsparender Weise der nächste Abfragezyklus innerhalb der Speicher S1/S2 bereits beginnen kann, obwohl das im Zwischenregister ZR zwischengespeicherte, zuletzt gelesene Wort noch längere Zeit zur Erzeugung einer entsprechenden analogen Spannung auf der Analogausgangsseite des Wandlers D/A bereitsteht. Jedem Lichtschalter LK sind in diesem Beispiel jeweils ein Wort im ersten Speicher S1 und ein Wort im zweiten Speicher S2 zugeordnet. Das im ersten Speicher S1 gespeicherte Wort stellt hier das, z.B. binär, kodierte Wort dar, welches der Steuerspannung bzw. dem Steuerpotential, z.B. V1, für direkte Durchschaltung eines speziellen Lichtschalters LK aus der Vielzahl der Lichtschalter LK entspricht. Im ersten Speicher S1 sind hierbei bevorzugt so viele, z.B. binär, kodierte Wörter für direkte Durchschaltung gespeichert, als die Anzahl der Lichtschalter LK beträgt, die von ein und demselben Wandler D/A zyklisch nacheinander über die Zwischenschalter SZ angesteuert werden. In entsprechender Weise sind hier im anderen, zweiten Speicher S2 die, z.B. wieder binär, kodierten Wörter gespeichert, welche jeweils jenen anderen Steuerpotentialen, u.zw. wieder V1, entsprechen, welche für die kreuzweise Durchschaltung an dieselben Elektroden des betreffenden Lichtschalters LK zu liefern sind. Derselben Elektrode, z.B. E11, des jeweils über einen der Zwischenschalter SZ angesteuerten betreffenden Lichtschalters LK wird vom Wandler D/A jeweils jenes Steuerpotential, hier $V1_{dir}$ oder $V1_{kreu}$ zugeleitet, das entweder der direkten Durchschalterichtung, also dem im ersten Speicher S1 gespeicherten Wort, oder der kreuzweisen Durchschalterichtung, also dem im zweiten Speicher S2 gespeicherten Wort entspricht – abhängig davon, welcher der beiden Wechselschalter SW, von denen stets einer leitend, der andere sperrend ist, soeben leitend ist.

Diese Wechselschalter SW können auch automatisch mittels des dritten, z.B. im Zentralsteuerwerk des Vermittlungssystems angebrachten, Speichers S3 gesteuert werden, welcher speichert, ob der Schalt-SOLL-Zustand des jeweils angesteuerten Lichtschalters LK direkt oder kreuzweise ist. Abhängig von diesem im dritten Speicher S3 gespeicherten Schalt-SOLL-Zustandssignals wird der jeweils über einen Zwischenschalter SZ angesteuerte Lichtschalter LK von dem ihm individuell zugeordneten Wort aus dem ersten Speicher S1 direkt oder von dem ihm individuell zugeordneten Wort aus dem zweiten Speicher S2 kreuzweise durchgeschaltet.

Die beiden Speicher S1, S2 oder weitere solche Speicher können zusätzlich nochmals in gleicher Anzahl weitere kodierte Wörter enthalten, welche dem zweiten Steuerpotential V2 an einer anderen Elektrode des Lichtschalters LK, vgl. E21, entsprechen und welche für sich durch denselben Wandler D/A oder durch einen weiteren solchen Wandler D/A aus solchen weiteren Wörtern erzeugt sein können. Für die Erzeugung dieses zweiten Steuerpotentials V2 kann also dabei ein eigener, zweiter Wandler D/A angebracht sein, oder ein auf einer zweiten Ader eines zweiadrigen Ausgangs des Wandlers D/A auftretendes veränderliches Potential ausgenutzt werden.

Grundsätzlich ist jedoch auch eine andere Organisation der Abspeicherung der Wörter in den verschiedenen Bereichen von Speichern möglich, statt sie, wie soeben geschildert, für direkte Durchschaltung im Speicher S1 und für kreuzweise Durchschaltung im Speicher S2 abzuspeichern. Das Wesen des Kernes der Erfindung wird davon nicht berührt, wie die Abspeicherung organisiert ist. Wesentlich ist, dass mindestens ein kodiert gespeichertes Wort über mindestens einen Wandler D/A mindestens ein analoges Steuerpotential V1 und/oder V2 erzeugt, welches seinerseits zur Steuerung von mindestens einem Lichtschalter LK dient.

Dadurch, dass also auf einem zweiten Substrat, z.B. aus Si oder GaAs, ein hinsichtlich seiner analogen Ausgangsspannung gegen Gleichspannungsversorgungs-Schwankungen stabilisierter D/A-Wandler in integrierter Technik angebracht ist, dass die Analogausgangsseite des Wandlers mit mindestens einer Elektrode des Lichtschalters verbunden ist und dass die Digitaleingangsseite des Wandlers zur Steuerung des Lichtschalters mit einem Byte-Generator, welcher im Betrieb aus Digits gebildete Wörter liefert, verbunden ist, wird also eine präzise optimale rasche Einstellung des betreffenden Lichtschalters ermöglicht, unabhängig um welchen speziellen Lichtschaltertyp es sich handelt.

Falls der Lichtschalter ein Richtungskoppler mit parallel angeordneten Lichtleitungen ist, kann der Byte-Generator zwei Speicher enthalten, von denen der erste Speicher Wörter speichert, welche der direkten Durchschaltung der betreffenden Lichtleitung des Lichtschalters entsprechen und von denen der zweite Speicher Wörter speichert, welche der kreuzweisen Durchschaltung zu der anderen Lichtleitung dieses Lichtschalters entsprechen. So ist unkompliziert mittels ein und desselben Wandlers die Belieferung der betreffenden Elektrode mit sowohl für direkte als auch für kreuzweise Durchschaltung optimalen Steuerpotentialen möglich. Falls hierbei zusätzlich der Byte-Generator noch einen dritten Speicher enthält, in welchem, z.B. binär, gespeichert ist, ob der erste Speicher oder der zweite Speicher ein Wort an die Digitaleingangsseite des Wandlers liefern soll, und falls zusätzlich der Ausgang dieses dritten Speichers jeweils mit dem Steuereingang von mindestens einem zwischen einerseits dem ersten Speicher und dem zweiten Speicher und andererseits der Digitaleingangsseite des Wandlers eingefügten Wechselschalter verbunden ist, kann in selbsttätiger Weise bedarfentsprechend, z.B. unmittelbar vom Zentralsteuerwerk des Vermittlungssystems dem jeweiligen Wegesuchergebnis entsprechend, die direkte und kreuzweise Durchschaltung eingestellt werden. Wenn dann noch zusätzlich pro parallel übertragenem Digit zwischen jeweils dem ersten und/oder zweiten Speicher und dem Wandler je ein Wechselschalter angebracht ist, ist eine besonders rasche Neueinstellung des betreffenden Lichtschalters möglich, und zwar noch rascher dann, wenn zwischen den Wechselschaltern und der Digitaleingangsseite des Wandlers jeweils eine Speicherzelle eines Zwischenregisters eingefügt ist, welches im Betrieb das den Lichtschalter steuernde Wort zwischenspeichert, so dass im ersten und zweiten Speicher bereits die nächste Abfrage läuft, obwohl der Wandler noch vom bisher anliegenden Wort gesteuert wird.

Ein Wandler kann an viele Lichtschalter jeweils individuell zugeordnete optimale präzise Grössen von Steuerpotentialen rasch liefern, wenn die Analogausgangsseite des Wandlers über eine Vielzahl von zyklisch nacheinander betätigten Zwischenschaltern mit den Elektroden verschiedener, dadurch in gleicher Weise zyklisch nacheinander angesteuerter, bevorzugt auf ein und demselben ersten Substrat angebrachter, Lichtschalter verbunden ist. An sich ist die Selbstentladung der so angesteuerten Elektroden meistens gering – sie kann aber dadurch, sogar völlig, kompensiert werden, dass die mittels der Zwischenschalter erreichbare zyklische Ansteuerung der Lichtschalter im Regelfall einen Refresh-Zyklus darstellt, welcher die Selbstentladungen der Elektroden, welche seit der letzten Ansteuerung auftraten, beseitigt.

Falls bei einer erfindungsgemässen Steueranordnung mit einer Vielzahl von Lichtschaltern auf dem ersten Substrat das zweite Potential V2, vgl. Fig. 2, der die Lichtschalter jeweils steuernden Steuerspannungen, für alle Lichtschalter auf diesem ersten Substrat, über einen einzigen gemeinsamen Steuereingang zugeleitet wird, ist der Aufwand für dieses zweite Steuerpotential V2 besonders gering. Die Werte für die Dämpfungen des Lichtschalters LK können aber noch dadurch weiter verbessert werden, dass das zweite Steuerpotential V2, im Prinzip ebenso wie das erste Steuerpotential V1, mittels eines in einem D/A-Wandler gewandelten Wortes jeweils zusätzlich erzeugt wird – und zwar in einem weiteren D/A-Wandler, oder im Prinzip sogar in demselben D/A-Wandler welcher zur Erzeugung des ersten Steuerpotentials dient – insbesondere falls dieser Wandler gleichzeitig zwei analogseitige Ausgangsanschlüsse aufweist.

Besonders wenige Leitungen sind zu stecken bzw. zu verlöten oder verschweissen, wenn das erste Substrat KF und das zweite Substrat IS gemeinsam einen einzigen Substratblock bilden, wobei also die Steueranordnung – oder zumindest ein Teil dieser Steueranordnung – auf demselben Substratblock IS/KF wie die Lichtleitungen LL des Lichtschalters/der Lichtschalter LK angebracht ist. Eine besonders hohe Geschwindigkeit der Steueranordnung und leichte Herstellbarkeit wird dabei erreichbar, wenn der Substratblock IS/KF in für sich im Prinzip bekannter Weise einen im wesentlichen homogenen, z.B. auf GaAs-Basis hergestellten, Körper darstellt. Eine hohe Geschwindigkeit der Steueranordnung bei besonders günstigen Dämpfungswerten der Lichtleitungen und der Lichtschalter wird aber dadurch erreicht, wenn der Substratblock IS/KF einen im wesentlichen heterogenen Körper darstellt, bei welchem das zweite, z.B. aus Si oder GaAs gebildete, Substrat IS in Dünnschichttechnik auf dem ersten, z.B. aus GaAs oder vor allem aus LiNbO₃ gebildeten, Substrat KF angebracht ist. Die Herstellung eines solchen heterogenen Substratblockes wird dadurch erleichtert, sowie die oft ohnehin nötige elektrische Isolation zwischen den beiden Substraten des Substratblockes wird dadurch erleichtert, dass das erste Substrat IS vom zweiten Substrat KF im Substratblock IS/KF durch eine dünne isolierende Zwischenschicht, die z.B. aus SiO₂ gebildet ist, getrennt ist.

Trotz grosser Streuung der auch durch Herstellungstoleranzen bedingten Eigenschaften des Wandlers, kann in besonders einfacher Weise eine präzise optimale Einstellung der Steuerpotentiale durch eine oft nur einmalige Prüfung jedes Lichtschalters dadurch erreicht werden, dass das jeweils optimale Potential V1, V2 der Steuerspannung V1/V2, bei dem das Nebensprechen und/oder die Dämpfung ein betreffenden Lichtschalter LK optimal ist, durch Varieren der der Digitaleingangsseite des D/A-Wandlers D/A gelieferten Wörter ermittelt wird und dass anschliessend das dem Optimum entsprechende Wort im Byte-Regenerator S1, S2 gespeichert wird. Unabhängig von den Herstellungstoleranzen der Lichtschalter und des Wandlers ist dann der jeweils für diese Lichtschalter und für diese Steueranordnung optimale Betrieb raschest reproduzierbar eingestellt, wobei die Ausschussquote für diese Herstellung von Substraten mit integrierten Lichtschaltern und Steueranordnungen zudem vergleichsweise sehr klein ist. Damit ist eine besonders grosse Chance für die wirtschaftliche Verwendung der in integrierter Technik gebildeten Lichtschalter trotz der sehr hohen Forderungen an die Dämpfungen und an den Herstellungsaufwand erreicht.

Die im folgenden beschriebene besondere Weiterbildung geht von einem speziellen optoelektronischen Verfahren aus, nämlich von dem im Oberbegriff des nebengeordneten Patentanspruchs 14 angegebenen speziellen Verfahren zur Steuerung der optoelektronischen Koppelpunkte eines Vermittlungssystems. Die im Patentanspruch 14 angegebene Weiterbildung dieses speziellen Verfahrens hängt hinsichtlich Lösung und Aufgabe trotz der Nebenordnung eng mit der dem Patentanspruch 1 entsprechenden Lösung und Aufgabe zusammen, wie noch näher erläutert werden wird. Ein solches spezielles Verfahren geht z.B. aus den schon oben zitierten vorveröffentlichten Schriften (1) und (3) hervor. Daneben ist eine Vielzahl von Literatur über Lichtschalter und deren Steuerungen, die z.B. Transistoren bzw. Dioden auf dem ersten oder auf einem zweiten Substrat enthalten, bekannt, vgl. z.B. die bereits oben zitierten Schriften (2) und (4) bis (11). Eine Vielzahl solcher, auf einem bzw. auf mehreren Substraten angebrachter Lichtschalter können also als Koppelpunkte eines Koppelfeldes mit rein optischen Zwischenleitungen in einem Fernsprech-Vermittlungssystem dienen, worauf insbesondere bereits in den obengenannten Schriften (1) und (3) hingewiesen ist.

Solche optoelektronischen Lichtschalter können in äquivalenter Weise häufig 2 × 2-Schalter in Koppelfeldern für rein elektrische Signale statt für optische Signale ersetzen, nämlich Schalter, die für sich vorbekannt sind z.B. durch (12) bis (17).

Solche optoelektronischen Lichtschalter haben den oft störenden, schon durch (3) beschriebenen Nachteil, dass die Steuerspannung bzw. die Steuerpotentiale der Steuerspannung zwar häufig präzis eingestellt sein müssen, um einen optimalen Betrieb zu erhalten, dass aber gemäss (3) eine rasche Alterung des Lichtschalters eintritt, die eine ständige Polaritätsumkehr des Feldes der Elektroden nach jeweils z.B. 500 ms, oder eine, jedenfalls weitgehend, kontinuierliche Änderung der Potentiale der Elektrode zur Beseitigung bzw. Kompensation dieser Alterung erfordert. Wird nämlich die Steuerspannung nicht genügend präzis eingestellt, dann ist entweder die Nebensprechdämpfung zwischen verschiedenen Lichtleitern des Lichtschalters und evtl. des ganzen ersten Substrats ungünstig, oder sonstige Durchgangsdämpfungen innerhalb der Lichtleitungen sind ungünstig.

Besonders für die Verwendung solcher Lichtschalter als Koppelpunkte eines (Fernsprech-)-Vermittlungssystems mit rein optischen Zwischenleitungen müssen hohe Anforderungen an die Nebensprechdämpfung einerseits und an die Durchgangsdämpfung andererseits der Lichtleitungen gestellt werden. Ausserdem ist eine ständig zunehmende kontinuierliche Änderung der Potentiale der Elektroden im Dauerbetrieb der Koppelpunkte des Vermittlungssystems zu aufwendig und unzuverlässig, da in einem solchen Vermittlungssystem klare, ständig einfach zu reproduzierende Betriebsverhältnisse herrschen müssen, alleine schon wegen der engen, vom Systembesitzer geforderten, einzuhaltenden Toleranzen.

Die Unterbrechungen des Verbindungsweges beim Schalten und beim Kompensieren der Alterung sollten also möglichst klein gemacht werden können. Diese Aufgabe löst die Erfindung durch die im Kennzeichen des Patentanspruchs 14 genannten Massnahmen, also vor allem durch eine geschickte Synchronisation der Polaritätsumkehr möglichst aller Koppelpunkte, die einem Verbindungsweg durchschalten. Der Betrag der Steuerspannung zwischen den Elektroden der betreffenden Koppelpunkte kann dabei während der «Pause» anders, z.B. höher, gewählt werden als der Betrag der Steuerspannung zwischen diesen Elektroden während der Übertragung der optischen Signale in den Verbindungsweg durchschaltenden Zustand. Je kürzer die Pause im Vergleich zur Übertragungsdauer ist, umso höher muss der Betrag der Steuerspannung während der Pause im Vergleich zum Betrag der Steuerspannung während der Übertragung sein. Während der Polaritätsumkehr kann der betreffende Verbindungsweg unterbrochen sein oder in einem undefinierbaren Zustand mit kleiner Nebensprechdämpfung sein, wenngleich, durch eine entsprechende Wahl jener Beträge der Steuerspannungen während der «Pause» mit Polaritätsumkehr, auch wieder derselbe Verbindungsweg durchgeschaltet sein kann, wie während der «Übertragung». Wählt man die Steuerspannungen und das Verhältnis der Dauern für die «Übertragung» und für die «Pause» jeweils geschickt aus, dann ist auch während der «Pause» derselbe Verbindungsweg wie während der Übertragung durchgeschaltet, wodurch auch während der «Pause», in der die betreffenden Felder umgepolt sind, eine zusätzliche, nebensprecharme Übertragung über denselben Verbindungsweg möglich wird. Die «Pause» kann aber dann auch z.B. ausschliesslich für die Übertragung von Wähltönen, Wählimpulsen, Gebührenzählimpulsen und sonstigen Daten zur Steuerung und Überwachung des Vermittlungssystems benutzt werden.

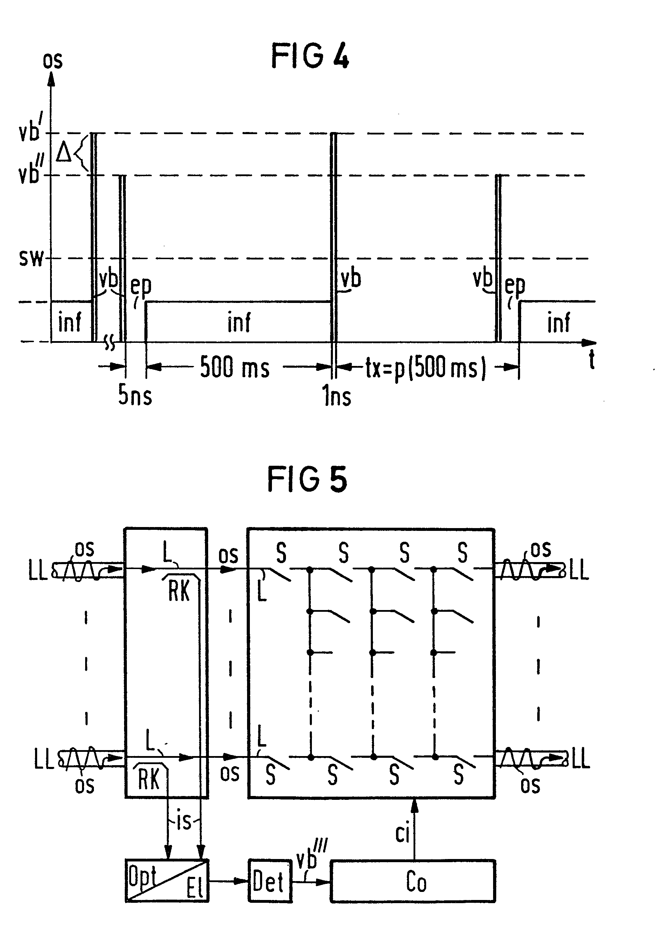

Die Fig. 5 zeigt in Verbindung mit Fig. 3 ein Beispiel einer Anordnung für ein Verfahren zur Steuerung der optoelektronischen Koppelpunkte S eines Vermittlungssystems, das rein optische Signale os überträgt, z.B. zwischen einer Vielzahl von eingangsseitig und ausgangsseitig angebrachten Glasfasern LL. Die zwischen den Koppelpunkten S liegenden Zwischenleitungen L und die an den Koppelfeldaussenanschlüssen angebrachten Zuleitungen LL stellen hier jeweils nicht elektrische, sondern optische Signale leitende Lichtleitungen dar. Die Koppelpunkte S liegen jeweils in integrierter Technik auf einem Substrat KF oder verteilt auf mehreren solchen Substraten KF, die z.B. aus GaAs oder $LiNbO_3$ bestehen können. Die Koppelpunkte S werden durch Lichtschalter gebildet, welche zum Schalten der optischen Signale os elektrisch ansteuerbare Elektroden enthalten und welche dazu mit den Elektroden mittels eines elektrischen Feldes auf die in integrierter Technik auf dem Substrat KF hergestellten Lichtleitungen L einwirken, indem das betreffende elektrische Feld die Lichtgeschwindigkeit in der betreffenden Lichtleitung L beeinflusst und damit den Schaltzustand dieses Lichtschalters S beeinflusst.

Länger andauernde Unterbrechungen von durchgeschalteten Verbindungswegen können dadurch vermieden werden, und störende gegenseitige Beeinflussungen der Lichtschalter untereinander können, wegen Minimierbarkeit der Potentiale zwischen verschiedenen Lichtschaltern während der eigentlichen Durchschaltung des Verbindungsweges, dadurch verringert werden, dass die Polarität des Feldes von wenigstens einem Teil der Elektroden von Zeit zu Zeit, z.B. nach jeweils 100 ms oder erst nach 500 ms, für eine Dauer tx einer Pause p umgekehrt wird, und dass die Polarität des Feldes zumindest bei allen auf demselben Substrat KF hergestellten Koppelpunkten S eines durchgeschalteten Verbindungsweges, zumindest angenähert, durch einen mit den optischen Signalen os übertragenen optischen Umpolungsbefehl vb, synchronisiert und damit umgekehrt wird. Der betreffende Umpolungsbefehl vb kann auch die Synchronisation der Umpolung bei nicht nur einem einzigen, sondern sogar bei einer Vielzahl solcher Verbindungswege bewirken. Die Unterbrechung des Verbindungsweges während dieser, völligen oder zumindest weitgehenden, Beseitigung der Alterung ist entsprechend synchronisiert und daher relativ kurz andauernd. Da alle Lichtschalter S gleichzeitig gegen die Alterung behandelt werden, sind die Potentialdifferenzen zwischen benachbarten Lichtschaltern S jeweils gering und damit ihre gegenseitigen Beeinflussungen gering, indem man räumlich benachbarte Verbindungswege, bzw. möglichst alle Verbindungswege, synchron umpolt. Der optisch übertragene Umpolungsbefehl gestattet dabei, trotz evtl. grosser Entfernungen mit langen Glasfaserstrecken LL zwischen verschiedenen Telefonämtern bzw. Vermittlungssystemen, eine Synchronisation der Umpolungen in allen Vermittlungssystemen zu erreichen, selbst wenn jedes dieser Systeme zur Wegesuche für sich durch einen eigenen Rechner gesteuert wird.

Man kann einen Teil is der Energie, z.B. 1%, des optischen Signals os aus dem durchgeschalteten Verbindungsweg (z.B. mittels eines entsprechend gesteuerten, als Richtungskoppler betriebenen Lichtauskopplers RK) auskoppeln, um den die Synchronisation der Polaritätsumkehrungen steuernden Umpolungsbefehl vb aus den übertragenen optischen Signalen os auszukoppeln. Das, vgl. Fig. 3, optische Signal os enthält bevorzugt normalerweise keine längeren, markanten speziellen Folgen vb von Digits, z.B. nicht lauter 1-Bits oder nicht lauter 0-Bits, oder z.B. nicht lauter 10000001-Bytes. Eine solche längere, z.B. 300 ns dauernde spezielle Folge vb von trotzdem aus dem Verbindungsweg ausgekoppelten, in einem Detektor Det identifizierten Digits stellt dann den Umpolungsbefehl vb für die Umkehrung der Polarität der Felder der Elektroden dar, zumindest für die Lichtschalter S auf dem betreffenden Substrat KF längs des betreffenden Durchgeschalteten Verbindungsweges. Während einer Pause p nach diesem Umpolungsbefehl vb, vgl. Fig. 3, also zwischen zwei Übertragungen der mit Teilnehmerinformationen inf modulierten optischen Signale os, wird also die Polarität der elektrischen Felder an den betreffenden Elektroden durch eine entsprechende Umsteuerung des Feldgenerators bzw. Potentialgenerators Co umgekehrt, was bei vernünftiger Grösse der von diesem Generator Co gelieferten Potentiale $c_i$ die Alterung der betreffenden Lichtschalter ganz oder weitgehend beseitigt. Die Pause p teilt daher jeweils die übertragenen, mit Teilnehmerinformationen inf modulierten optischen Signale os in Blöcke, z.B. angenähert gleicher Dauer, gem. Fig. 3 beispielsweise von jeweils 500 ms Dauer.

Je nach Art jenes Umpolungsbefehls vb, insbesondere nach Art jener Folge vb, sind zur Identifizierung des Umpolungsbefehls vb im Detektor Det verschiedene Verfahren anwendbar. Besonders aufwandsarm ist ein Verfahren, bei dem das mit Teilnehmerinformationen inf modulierte, z.B. mit Bitraten von 200 MHz übertragene, optische Signal os nach dem HDB3-Code moduliert ist, und bei dem die Folge vb von, dann bevorzugt identischen, Digits (die dann also aus lauter 0-Bits oder aus lauter 1-Bits bestehen kann) unmittelbar vor Beginn der Pause p übertragen wird. Die ausgekoppelte optische Folge vb kann dann nämlich in dem optisch-elektrischen Wandler Opt/El in eine elektrische Folge vb umgewandelt und in dem Detektor Det mit den Ausgangssignalen eines synchron betriebenen Oszillators, mittels einer Koinzidenzen und Digitmuster prüfenden Logikschaltung, verglichen werden. Dieser Vergleich ist besonders leicht möglich, wenn einerseits die Folge vb lauter identische Digits, z.B. lauter 1-Bits, enthält und wenn dieser Oszillator spätestens bei Beginn dieser Folge vb mit dem Zeittakt der Digits dieser Folge vb zwangssynchronisiert wurde. Die Vergleichsergebnisse, also die Ausgangssignale der Logikschaltung, können in einem Zähler des Detektors Det gezählt werden – wobei ein Zählergebnis, das einen der Länge der Folge vb entsprechenden Grenzwert übersteigt, den Potentialgenerator, also den das Potential $c_i$ für die Felder liefernden «Feldgenerator» Co, zum Wechsel der Polarität des Feldes, also zur Lieferung des Feldes umgekehrter Polarität, veranlasst; wobei aber ein diesen Grenzwert nicht erreichendes Zählergebnis den Feldgenerator Co zur Fortsetzung der Lieferung des Feldes bzw. des entsprechenden Potentials $c_i$ mit bisheriger Polarität veranlasst; und wobei ein Vergleichsergebnis, das dem Fehlen eines Digits im Zuge der gezählten Folge entspricht, sofort den Zähler auf Null zurückstellt, also anzeigt, dass noch nicht die Folge vb im Detektor Det angekommen ist.

Die Dauer tx der Pause p kann also gleich oder anders, insbesondere kürzer, als die Dauer der in Fig. 3 als ca. 500 ms angenommenen Übertragung von Informationen inf sein. Je kürzer die Pause p ist, umso höher muss der Betrag der Steuerspannungen $c_i$ an den Elektroden der Lichtschalter S sein, um deren Alterung rückgängig zu machen. Aber auch Polaritätsumkehrungen der Felder mit z.B. jeweils 500 ms der einen und dann jeweils 500 ms der anderen Polarität, aber etwa gleichen Betrages, wie durch (3) bekannt, sind bei der Erfindung anwendbar. Die Erfindung gestattet also, je nach Bedarf der Dauer der Übertragungen inf und der Dauer der Pause p verschiedenartigste Betriebsweisen.

Eine Weiterbildung der Erfindung löst die zusätzliche Aufgabe, trotz der Unterschiede der Grösse der optimalen Steuerpotentiale bzw. Steuerspannungen $c_i$ für die Lichtschalter S während der Übertragung inf und während der Pause p, im Betrieb individuell sehr präzise eingestellte Steuerpotentiale $c_i$ zur Steuerung des jeweils betreffenden Lichtschalters S in für technische Anwendungen sehr zweckmässiger Weise zur Verfügung zu stellen. Diese Weiterbildung gestattet überdies die Ausschussquote zumindest bei der Herstellung der Lichtschalter S – wenn nicht auch bei der Herstellung des, nämlich auf demselben Substrat anbringbaren, Feldgenerators Co, evtl. auch des Detektors Det und optisch-elektrischen Wandlers Opt/El – dadurch stark zu reduzieren, dass diese Weiterbildung eine spezielle Grösse $c_i$ innterhalb eines weiteren Toleranzbereiches verschiedenster Steuerspannungsgrössen $c_i$ jeweils präzise, schnell und leicht reproduzierbar zur Verfügung stellt. Durch die Verringerung der Ausschussquote bietet diese Weiterbildung zusätzlich also eine wirtschaftlich besonders günstige Chance zur Herstellung solcher Lichtschalter S und ihrer Steueranordnung Co/Det/Opt/El, insbesondere für den intensiven Einsatz derselben in Koppelfeldern von Fernsprech-Vermittlungssystemen.

Diese Weiterbildung löst diese Aufgabe mit der im Patentanspruch 1 angegebenen Massnahme, indem der oder die, die Elektroden mit den Feldern beliefernde(n) Feldgenerator(en) Co, in einem Speicher gespeicherte, digitale Wörter mittels eines Digital-Analogwandlers in analoge, den Elektroden zugeleitete elektrische Potentiale $c_i$, welche die Felder erzeugen, umwandelt. Insbesondere kann dazu gemäss Patentanspruch 1 im Feldgenerator Co ein hinsichtlich seiner analogen Ausgangsspannung $c_i$ gegen Gleichspannungsversorgungs-Schwankungen stabilisierter D/A-Wandler in integrierter Technik angebracht sein, wobei die Analogausgangsseite des Wandlers mit mindestens einer Elektrode des soeben gesteuerten Lichtschalters S leitend verbunden ist und wobei die Digitaleingangsseite dieses Wandlers zur Steuerung des Lichtschalters S mit einem mindestens einen Speicher enthaltenden Byte-Generator, welcher im Betrieb die aus Digits gebildeten Wörter liefert, verbunden ist. Der Detektor Det steuert diesen Speicher so, dass dieser, synchronisiert von den Umpolungsbefehlen vb, der Polarität entsprechende Wörter liefert. Man kann sogar mit einem einzigen solchen Feldgenerator C über in Zeitmultiplexweise betriebene Schalter eine Vielzahl von Lichtschaltern S steuern, wobei dann jeder Lichtschalter S sogar eine andere, für ihn allein typische Steuerspannung $c_i$ zugeleitet erhält.

Noch präziser wird die jeweils optimale Grösse der Steuerspannung bzw. Steuerpotentials $c_i$ ge-

liefert, wenn man die Alterung des betreffenden gesteuerten Lichtschalters S während der Dauer eines einzigen Blockes inf von optischen Signalen (im in Fig. 3 gezeigten Beispiel beträgt diese Dauer 500 ms) berücksichtigt, indem man die während dieser Dauer eintretende leichte Änderung der optimalen Grösse des Potentials ci berücksichtigt. Bei diesem Verfahren wird also das gelieferte Potential ci während der Dauer des Blockes, entsprechend der Änderung der optimalen Grösse, verändert. Dazu kann z.B. die Kennlinie des D/A-Wandlers und/oder das betreffende, das analoge Potential ci jeweils erzeugende, diesem D/A-Wandler zugeleitete digitale Wort, während der Übertragung des Blockes inf der mit Teilnehmerinformationen modulierten optischen Signale, kontinuierlich oder in kleinen Sprüngen und damit de facto kontinuierlich, verändert werden. Z.B. kann das betreffende Wort, das dem analogen Wert ci entspricht, dadurch weitgehend kontinuierlich vergrössert oder verkleinert werden, indem das Wort, z.B. mittels eines Addierers oder Subtrahierers, an seinen niedrigstwertigen Stellen jeweils nach und nach während der Dauer des Blockes inf verändert wird.

Eine besonders präzise Steuerspannung ci kann dadurch vom D/A-Wandler geliefert werden, wenn während der Übertragung eines Informationsblockes, vgl. inf in Fig. 3, zu allen oder zu einzelnen verschiedenen Zeitpunkten, jeweils die Dämpfung der Lichtschalter S in deren nichtdurchlässigen sperrenden Übertragungsrichtung laufend gemessen wird und das Messergebnis zur Regelung, d.h. Veränderung, der Steuerspannung ci ausgenutzt wird. Diese Messung ist z.B. möglich, wenn mittels mindestens eines Kopplers bzw. optischen Empfängers, der in einer nicht zum Verbindungsweg durchgeschalteten Abzweigung des durchgeschalteten Verbindungswegs eingefügt ist, die Stärke der an sich unerwünschten Ankopplung dieser Abzweigung an den Verbindungsweg, wenn nicht ständig dann öfters gemessen wird, und wenn diese gemessene Stärke der Ankopplung zur Veränderung der Kennlinie des Wandlers und/oder des betreffenden jeweils erzeugenden digitalen Wortes ausgenutzt wird. Der optische Empfänger kann dabei unmittelbar an eine dem jeweiligen betreffenden Lichtschalter S nahe Zwischenleitung L des Koppelfeldes oder auch an die zugehörige Koppelfeldausgangsleitung LL angekoppelt sein. Das Messergebnis kann bevorzugt einen Steuerrechner des Koppelfeldes veranlassen, systematisch die Kennlinie des D/A-Wandlers und/oder das jeweils steuernde digitale Wort nach oben und unten zu verändern, bis das jeweilige Optimum des Betrages der Steuerspannung ci gefunden ist. Für diese Messung können auch, dafür in spezielle Zeitkanäle des Informationsblockes inf eingefügte, standartisierte Mess-Lichtblitze ausgenutzt werden, wodurch die Messung noch genauer wird, nämlich völlig unabhängig von der Zahl der bestehenden Verbindungen, die über den Verbindungsweg durchgeschaltet sind, und völlig unabhängig von der analogen Amplitude der in den Verbindungen übertragenen Informationen, sowie de facto unabhängig vom zur Übertragung verwendeten Code.

In entsprechender Weise kann auch während der Pause p durch zugehörige digitale Wörter und durch kontinuierliche Veränderung dieser Wörter und/oder der Kennlinie auch eine hohe Stabilität des Schaltzustandes der Lichtschalter S während der Pause p erreicht werden.

Eine Veränderung der Kennlinie des D/A-Wandlers entspricht einer Veränderung der Zuordnung der digitalen Wörter zu den analogen Ausgangssignalen ci des D/A-Wandlers. Häufig ist es hardwaremässig einfacher bzw. zuverlässiger und präziser, die digitalen Wörter selbst zu verändern; — insbesondere numerisch mit einem, z.B. dem Übertragungsdauer/Pausendauer-Verhältnis entsprechenden, Faktor zu multiplizieren, zum Beispiel um aus dem die Übertragung steuernden Wort das die Pause steuernde Wort zu erzeugen.

Bei bestimmten, von dem verwendeten Lichtschaltertyp abhängigen Steuerspannungen ci während — zumindest eines Teils — der Pause p kann an sich derselbe Verbindungsweg auch während dieser Pause p, wieder mit optimalen Dämpfungswerten, in im Prinzip gleicher Weise zu einer zusätzlichen Übertragung eines zusätzlichen Informationsblockes inf ausgenutzt werden. Geeignete Beträge für die Steuerspannungen ci gehen z.B. aus (8), (10) sowie (18) hervor. Während des Restes der Pause kann ohne Durchschaltung der Rest der Alterung der Lichtschalter beseitigt werden.

Zusammenfassend ist also festzustellen, dass sich die Erfindung einschliesslich ihrer Weiterbildungen für Vermittlungssysteme mit durchgehend optischen Signalen eignet, bei denen die Vermittlungsfunktionen von Substraten mit Matrizen aus Lichtschaltern übernommen werden:

Integrierte Lichtschalter auf der Basis des elektro-optischen Effekts zeigen Alterungserscheinungen, nämlich eine Drift, insbesondere aufgrund einer Ladungsträgererzeugung bzw. -wanderung im Substrat-Kristall. Durch periodisches Umpolen der Steuerspannung bzw. durch deren Polaritätsumkehr ist dieser Effekt vermeidbar. Während der Umpolung wird aber der Informationsfluss auf dem Verbindungsweg unterbrochen. Es ist daher bevorzugt ein Übertragungsverfahren anzuwenden, das eine Anpassung des Übertragungsverfahrens an die periodische Umpolung ohne wesentlichen Verlust von Informationen gestattet, das ferner eine Pulsverformung bei PCM-modulierten Informationen zu vermeiden gestattet, da optische Regeneratoren derzeit problematisch sind, und bei dem ausserdem die Übertragungs-Bitrate der fortschreitenden Entwicklung leicht anpassbar ist. Dies ist bei der Erfindung gegeben.

Die Steuerung der Lichtschalter kann relativ einfach mit im wesentlichen Rechteckpotentialen einer Frequenz f ≥ 2Hz erfolgen. Je nach Lichtschalterprinzip liegt an einer oder an einigen der Elektroden eines Lichtschalters jeweils abwechselnd positives bzw. negatives Potential an, während an dessen restlichen Elektroden z.B. fest Massepotential liegt oder z.B. Rechteckpotentiale entgegengesetzter Polarität liegen. Insbesondere können auch die Potentiale der Elektroden in für sich bekannter Weise jeweils bei oft nahezu gleichem Betrag der Steuerspannung vertauscht werden, um den Verbindungsweg durchzuschalten. In allen Fällen wird die Richtung des Feldes der Elektroden regelmässig mittels eines optischen Umpolungsbefehls umgepolt, um die Alterung zu beseitigen. Diese Umpolung kann bevorzugt wie folgt gesteuert werden: In den optischen Informationsstrom wird, z.B. alle 0,5 Sekunden, ein markantes Umpolungsbefehlsbit, oder eine Vielzahl davon als Folge eingeblendet. Sein Erscheinen veranlasst die Steuerung, die Potentiale umzupolen. Das Umpolungsbefehlsbit durchläuft die gesamte optische Übertragungsstrecke. Damit wird die Umpolung der Felder auf der gesamten Übertragungsstrecke synchronisierbar, unabhängig von der jeweiligen Länge des optischen Verbindungsweges.

Der optische Sender der Strecke sendet im Anschluss an das Umpolungsbefehlsbit eine kurze Zeitspanne, oben Pause genannt, z.B. keine Information. Diese Pause dient dann nur zum Umpolen der Felder. In der Pause können aber ebenfalls Übertragungen erreicht werden. Diese Pause kann, zusammen mit den übertragenen Informationen und den Signalisierungen wie Wählsignalen, in einer Überrahmenstruktur des Vermittlungssystemes eingeordnet sein.

Es kann für die Information auf der gesamten Strecke ein Code verwendet werden, der normalerweise keine längeren «0»- oder «1»-Digit-Folgen beinhaltet, z.B. der HDB3-Code. Hingegen bilden die Umpolungsbefehl-Bitfolgen dann z.B. eine ununterbrochene Folge von «0»- oder «1»-Digits. Dadurch ist eine einfache Identifizierung derselben in einem Detektor möglich. Vor oder in dem Koppelfeld wird, z.B. mittels eines Richtkopplers, ein Teil der ankommenden Leistung der optischen Signale ausgeblendet und nach der optoelektrischen Wandlung im Steuerteil der Vermittlung verarbeitet. Dieses Steuerteil veranlasst nämlich, dass bei Ankunft des Umpolungsbefehlsbit, bzw. einer Folge davon, gleichzeitig die Polaritäten der Felder an allen Lichtschaltern des betreffenden Verbindungsweges getauscht werden. Dies ist bei rechnergesteuerten Vermittlungssystemen auch mit Hilfe des im Rechner abgespeicherten Verbindungswegeplans möglich, indem dann der Rechner die Funktionen des Detektors und sogar des Feldgenerators mit übernehmen kann.

Zur Vermeidung von Verlusten von Teilnehmerinformationen während der Pause und/oder während der Übertragung der dem optischen Signal aufmodulierten Umpolungsbefehlsbits können die Teilnehmerinformationen vor der Übertragung auch zeitlich entsprechend komprimiert und nach der Übertragung wieder zeitlich gedehnt werden, z.B. mit einem Verfahren, das dem in den
(23) DE-PS 1 245 438
(24) DE-PS 1 279 768
oder
(25) DE-OS 2 902 897,

genannten Übertragungsverfahren ähnlich oder gleich ist.

Die Aufgabe der nun erläuterten Weiterbildung ist, durch eine leicht durchführbare und nur kurze Dauer beanspruchende zusätzliche Massnahme den Umpolungsbefehl leicht aus der Folge der übertragenen optischen Signale eliminieren bzw. erkennen zu können. Die Erfindung soll darüber hinaus gestatten, beliebige Codes statt den HDB3-Code für die Übertragung der durch Digits gebildeten, mit den Teilnehmerinformationen modulierten optischen Signale zur störungsarmen Erkennung der Umpolungsbefehle verwenden zu können.

Diese Aufgabe wird durch die im Patentanspruch 11 angegebenen Massnahmen gelöst, also letzten Endes vor allem durch die Verwendung eines kurzen, besonders lichtintensiven Lichtblitzes als Umpolungsbefehl.

In Fig. 4 sind die besonders hohen, kurzdauernden Umpolungsbefehle vb gezeigt. Sie haben z.B. die drei bis sechsfache Amplitude der übrigen übertragenen optischen Signale inf. Die Dauer dieser Lichtblitze vb beträgt z.B. nur 1 ns.

Demgemäss wird also der Umpolungsbefehl vb durch einen solchen kurzen Lichtblitz gebildet, der deutlich lichtstärker ist als die maximale Lichtstärke der mit Informationen modulierten optischen Signale inf. Diese besonders lichtstarken Lichtblitze sind wegen ihrer hohen Amplitude leicht als solche innerhalb der Gesamtheit der Signale os erkennbar und ausfilterbar, vergl. Fig. 5. Wegen dieser leichten Erkennbarkeit ist nun unschädlich, wenn während der Dauer der Übertragung von Informationen inf die Lichtstärke stets Null beträgt – z.B. weil derzeit über die betreffenden Zeitkanäle keine Informationen übertragen werden. Die durch Lichtblitze gebildeten Umpolungsbefehle vb sind also sehr leicht auch bei Störungen während der Übertragung der Signale inf erkennbar, selbst wenn kein HDB3-Code verwendet wird.

Fig. 4 zeigt ein Beispiel, bei dem die Lichtblitze vb zwei verschiedene Amplituden aufweisen, vergl. vb' und vb''. Die Lichtblitze unterscheiden sich also durch die in Fig. 4 gezeigte Differenz dieser beiden Amplituden. Auf diese Weise kann für die Hinumpolung ein Lichtblitz der einen Amplitude vb' und für die Rückumpolung ein Lichtblitz der anderen Amplitude vb'' verwendet werden. Auf diese Weise sind die verschiedenen Umpolungsphasen zuverlässig durch Umpolungsbefehle steuerbar, wenn die Dauer der einzelnen Umpolungsphasen verschieden sind, z.B. von Umpolungsbefehl zu Umpolungsbefehl verschieden sind, je nach Güte der Dämpfung der Lichtschalter S in ihrer nichtdurchgeschalteten Richtung, vergl. Fig. 5 und auch die Beschreibung zu Patentanspruch 19. Auf diese Weise ist es sogar möglich, ohne Änderung der Kennlinien des D/A-Wandlers alleine durch Änderung der Dauer der Umpolungsphasen eine optimale Sperrdämpfung der Lichtschalter S in ihrer nichtdurchgeschalteten Richtung einzuregeln.

Grundsätzlich ist es jedoch auch möglich, die Hinumpolung und die Rückumpolung durch in anderer Weise verschieden gestaltete Umpolungsbefehle zu kennzeichnen. Auch wenn die Umpolungsbefehle durch besonders lichtstarke, kurze Lichtblitze von identischer Amplitude gebildet werden, können Umpolungsbefehle für die Hinumpolung anders als die Umpolungsbefehle für die Rückumpolung gebildet werden – z.B. indem der die Hinumpolung einleitende Umpolungsbefehl durch einen einzigen solchen Lichtblitz vb und der die Rückumpolung einleitende Umpolungsbefehl durch jeweils zwei dicht aufeinanderfolgende derartige Lichtblitze gebildet werden. In diesem Fall wird zum Erkennen der Umpolungsbefehle nicht die Amplitude der Lichtblitze, sondern deren Anzahl ausgewertet. Zur Auswertung kann man übrigens z.B. am Eingang der Steueranordnung, z.B. im Detektor Det, vergl. Fig. 5, eine Schwellwertschaltung anbringen, die auf den Lichtblitz vb, aber nicht auf die mit Informationssignalen modulierten optischen Signale inf anspricht. Der so erkannte Umpolungsbefehl vb kann durch die Schwellwertschaltung von den sonstigen Signalen inf getrennt und als Steuerbefehl vb''' dem Feldgenerator Co zur Feldumpolung zugeführt werden. In Fig. 4 ist der Schwellwert sw einer solchen Schwellwertschaltung angedeutet, um zu zeigen, daß der Steuerbefehl vb''' z.B. durch jene Amplitude der Lichtblitze vb gebildet werden kann, die diesen Schwellwert sw überschreiten. Die Amplitude der Steuerbefehle vb''' beträgt also z.B. (vb''−sw) oder (vb''−sw).

Der Lichtblitz vb kann unschwer durch einen eigens dafür angebrachten Laser erzeugt werden, wobei dieser Lichtblitz vb z.B. in die jeweils betreffende Anschluss-Lichtleitung LL des Koppelfeldes KF eingekoppelt wird, vergl. Fig. 5.

Normalerweise folgt auf den Umpolungsbefehl vb eine längere Pause Tx = p von mindestens z.B. 400 ns, wenn nicht z.B. 500 ms, bis zum nächsten Zeitkanal für Signale os oder inf. Im ersten Teil der Pause p von z.B. 400 ns wird vom Feldgenerator Co mit dem ihm zuzubilligenden Zeitaufwand tx = p das Feld geändert und bleibt dann meistens, z.B. für 500 ms, umgepolt. Innerhalb des ersten Teils dieser Pause p von 400 ns können aber, vergleiche Fig. 5, zusätzliche Steuersignale is, z.B. Messwerte für die jeweilige Sperrdämpfung der Lichtschalter S, übertragen werden. Weil das Empfangselement, z.B. eine Diode im Detektor Det, vom Lichtblitz vb zunächst meistens übersteuert wird, ist dann vor der Übertragung der Signale is eine kurze Erholungspause ep von z.B. 5 ns einzufügen. Eine solche Erholungspause ep, vergl. Fig. 4, ist auch vor dem ersten Zeitschlitz der Signale inf einzufügen, falls der Lichtblitz vb, oder ein zusätzlicher Lichtblitz vb, auch am Ende der Feldumpolungspause p von 500 ms übertragen bzw. eingespeist wird.

## Patentansprüche

1. Steueranordnung zur Steuerung eines in integrierter Technik hergestellten Lichtschalters (LK) für optische, in einer auf einem ersten Substrat (KF), z.B. aus GaAs oder aus LiNbO$_3$, angebrachten Lichtleitung (LL, A–A', B–B') geführte Signale – z.B. zur Steuerung eines als Richtungskoppler ausgestalteten Lichtschalters (LK) mit zwei eng benachbart längs einer Koppelstrecke parallel angeordneten, direkt oder kreuzweise durchschaltbaren Lichtleitungen (A–A', B–B') –, wobei

– an der Lichtleitung (LL) zum Steuern des Lichtschalters (LK) jeweils mindestens eine elektrisch steuerbare, elektrisch leitende Elektrode (E11...E14) des Lichtschalters (LK) angebracht ist und

– gesteuert von dem elektrischen Steuerpotential (V1, V2) an der Elektrode, das in der betreffenden Lichtleitung (LL, A–A') geführte Licht geschaltet wird – also z.B. direkt vom Eingang der Lichtleitung zum Ausgang derselben Lichtleitung (von A zu A') durchgeschaltet wird oder kreuzweise zwischen den Lichtleitungen des Richtungskopplers (LK) ausgetauscht (von A zu B') durchgeschaltet wird –;

insbesondere zur Steuerung einer Vielzahl solcher, auf einem einzigen ersten Substrat (KF) in integrierter Technik hergestellter Lichtschalter (LK), die als Koppelpunkte eines Koppelfeldes mit rein optischen Zwischenleitungen in einem Fernsprech-Vermittlungssystem dienen, dadurch gekennzeichnet, dass

– auf einem zweiten Substrat (IS), z.B. aus Si oder GaAs, ein hinsichtlich seiner analogen Ausgangsspannung gegen Gleichspannungsversorgungs-Schwankungen stabilisierter D/A-Wandler (D/A) in integrierter Technik angebracht ist,

– die Analogausgangsseite des Wandlers (D/A) mit mindestens einer Elektrode (über V1 an E11, E22, E13, E24) des Lichtschalters (LK) verbunden ist und

– die Digitaleingangsseite des Wandlers (D/A) zur Steuerung des Lichtschalters (LK) mit einem mindestens einen Speicher (S1, S2, S3) enthaltenden Byte-Generator (S1, S2, ZR), welcher im Betrieb aus Digits gebildete Wörter liefert, verbunden ist.

2. Steueranordnung nach Patentanspruch 1, dadurch gekennzeichnet, dass

– dem Lichtschalter (LK) ein Richtungskoppler mit parallel angeordneten Lichtleitungen (A–A', B–B') ist und

– der Byte-Generator zwei Speicher (S1, S2) enthält, von denen

– der erste Speicher (S1) Wörter speichert, welche der direkten Durchschaltung der betreffenden Lichtleitung (von A nach A') des Lichtschalters (LK) entsprechen und

– der zweite Speicher (S2) Wörter speichert, welche der kreuzweisen Durchschaltung zu der anderen Lichtleitung (von A nach B') dieses Lichtschalters (LK) entsprechen.

3. Steueranordnung nach Patentanspruch 1, dadurch gekennzeichnet, dass

– der Byte-Generator auch einen dritten Speicher (S3) enthält, in welchem, z.B. binär, gespeichert ist, ob der erste Speicher (S1) oder der zweite Speicher (S2) ein Wort an die Digitaleingangsseite des Wandlers (D/A) liefern soll, und
- der Ausgang dieses dritten Speichers (S3) jeweils mit dem Steuereingang von mindestens einem zwischen einerseits dem ersten Speicher (S1) und dem zweiten Speicher (S2) und andererseits der Digitaleingangsseite des Wandlers (D/A) eingefügten Wechselschalter (SW) verbunden ist.

4. Steueranordnung nach Patentanspruch 3, dadurch gekennzeichnet, dass
- pro parallel übertragenem Digit des jeweils vom ersten und/oder zweiten Speicher (S1, S2) gelieferten Wortes je ein Wechselschalter (SW) angebracht ist, und
- zwischen den Wechselschaltern (SW) und der Digitaleingangsseite des Wandlers (D/A) jeweils eine Speicherzelle eines Zwischenregisters (ZR) eingefügt ist, welches im Betrieb das den Lichtschalter (LK) steuernde Wort zwischenspeichert.

5. Steueranordnung nach einem der vorhergehenden Patentansprüche, dadurch gekennzeichnet, dass
- die Analogausgangsseite des Wandlers (D/A) über eine Vielzahl von zyklisch (mit 100 kHz) nacheinander betätigten Zwischenschaltern (SZ) mit den Elektroden verschiedener, dadurch in gleicher Weise zyklisch (mit 100 kHz) nacheinander angesteuerter, bevorzugt auf ein und demselben ersten Substrat (KF) angebrachter, Lichtschalter (LK) verbunden ist.

6. Steueranordnung nach Patentanspruch 5, dadurch gekennzeichnet, dass
- die dadurch erreichbare zyklische Ansteuerung der Lichtschalter (LK) im Regelfall einen Refresh-Zyklus darstellt, welcher Selbstentladungen der Elektroden (E11...E24), welche seit der letzten Ansteuerung auftraten, beseitigt.

7. Steueranordnung nach einem der vorhergehenden Patentansprüche, mit einer Vielzahl von Lichtschaltern (LK) auf dem ersten Substrat (KF), dadurch gekennzeichnet, dass
- das zweite Steuerpotential (Vs) der die Lichtschalter (LK) jeweils steuernden Steuerspannungen (V1/V2) für alle Lichtschalter (LK) auf diesem ersten Substrat (KF) ein über einen einzigen, gemeinsamen Steuereingang zugeleitetes Gleichpotential (V2) ist.

8. Steueranordnung nach einem der Patentansprüche 1 bis 6, dadurch gekennzeichnet, dass
- das zweite Steuerpotential (V2) der den/die Lichtschalter (LK) jeweils steuernden Steuerspannungen (V1/V2), ebenso wie dessen erstes Steuerpotential (V1), mittels eines in einem D/A-Wandler (D/A) gewandelten Wortes erzeugt ist.

9. Steueranordnung nach einem der vorhergehenden Patentansprüche, dadurch gekennzeichnet, dass
- das erste Substrat (KF) und das zweite Substrat (IS) gemeinsam einen einzigen Substratblock bilden,
- also die Steueranordnung - oder zumindest ein Teil dieser Steueranordnung (ZR, D/A, RZ) - auf demselben Substratblock (IS/KF) wie die Lichtleitungen (LL) des Lichtschalters/der Lichtschalter (LK) angebracht ist.

10. Steueranordnung nach Patentanspruch 9, dadurch gekennzeichnet, dass
- der Substratblock (IS/KF) einen im wesentlichen homogenen, z.B. auf GaAs-Basis hergestellten, Körper darstellt.

11. Steueranordnung nach Patentanspruch 9, dadurch gekennzeichnet, dass
- der Substratblock (IS/KF) einen im wesentlichen heterogenen Körper darstellt, bei welchem das zweite, z.B. aus Si gebildete, Substrat (IS) in Dünnschichttechnik auf dem ersten, z.B. aus GaAs oder LiNbO$_3$ gebildeten, Substrat (KF) angebracht ist.

12. Steueranordnung nach Patentanspruch 11, dadurch gekennzeichnet, dass
- das erste Substrat (IS) vom zweiten Substrat (KF) durch eine dünne isolierende Zwischenschicht, die z.B. aus SiO$_2$ gebildet ist, getrennt ist.

13. Verfahren zur Justierung der Steueranordnung nach einem der vorhergehenden Patentansprüche, dadurch gekennzeichnet, dass
- das jeweils optimale Potential (V1, V2) der Steuerspannung (V1/V2), bei dem das Nebensprechen und/oder die Dämpfung im betreffenden Lichtschalter (LK) optimal ist, durch Variieren der der Digitaleingangsseite des D/A-Wandlers (D/A) gelieferten Wörter ermittelt wird und
- das dem Optimum entsprechende Wort im Byte-Generator (S1, S2) gespeichert wird.

14. Verfahren zur Steuerung der optoelektronischen Koppelpunkte (S) eines Vermittlungssystems mit rein optische Signale (os) übertragenden, Lichtleitungen darstellenden Zwischenleitungen (L), wobei diese Koppelpunkte (S)
- in integrierter Technik auf einem Substrat (KF), z.B. aus GaAs oder LiNbO$_3$, hergestellte Lichtschalter (S) bilden, welche
  - zum Schalten der optischen Signale (os) elektrisch ansteuerbare Elektroden enthalten und
  - dazu mit den Elektroden mittels eines elektrischen Feldes auf die in integrierter Technik auf dem Substrat (KF) hergestellten Lichtleitungen (L) einwirken,
insbesondere für ein Fernsprech-Vermittlungssystem, dadurch gekennzeichnet, dass
- die Polarität des Feldes von wenigstens einem Teil der Elektroden von Zeit zu Zeit, z.B. nach 100 ms, für die Dauer (tx) einer Pause (p), z.B. von 10 ms, umgekehrt wird, und
- die Polarität des Feldes zumindest bei allen, auf demselben Substrat (KF) hergestellten Koppelpunkten (S) eines durchgeschalteten Verbindungsweges, ausgelöst durch einen eine Zeitmarkierung bildenden und dem optischen Signal (os) aufmodulierten Umpolungsbefehl (vb), zumindest angenähert gleichzeitig umgekehrt wird.

15. Verfahren nach Patentanspruch 14, dadurch gekennzeichnet, dass
- ein Teil der Energie (z.B. 1%) des optischen Signals (os) aus dem durchgeschalteten Verbindungsweg (mittels RK) ausgekoppelt wird,
- die übertragenen modulierbaren optischen Signale (os) normalerweise keine speziellen markanten Folgen von Digits, z.B. von lauter 1-Bits oder 0-Bits, enthalten, und

– eine solche Folge (vb) von trotzdem aus dem Verbindungsweg ausgekoppelten Digits den Umpolungsbefehl (vb) darstellt, welcher die Umkehrung der Polarität der Felder der Elektroden, zumindest auf dem betreffenden Substrat (KF) längs des betreffenden Verbindungsweges, für die Dauer (tx) der Pause (p) auslöst,

– die Pause (p) jeweils die übertragenen, mit Teilnehmerinformationen (inf) modulierten optischen Signale in Blöcke, von bevorzugt jeweils gleicher Dauer (500 ms), unterteilt.

16. Verfahren nach Patentanspruch 15, dadurch gekennzeichnet, dass

– das mit Teilnehmerinformationen modulierte optische Signal (inf) nach dem HDB3-Code moduliert ist,

– der Umpolungsbefehl als Folge von identischen Digits (vb) unmittelbar vor Beginn der Pause (p) übertragen wird,

– die ausgekoppelte Folge (vb) in einem Detektor (Det) mit den Ausgangssignalen eines synchron betriebenen Oszillators verglichen wird,

– das Vergleichsergebnis in einem Zähler des Detektors (Det) gezählt wird, und

– ein einen Schwellwert übersteigendes Zählergebnis einen Feldgenerator (Co) zum Wechsel der Polarität des Feldes, also zur Lieferung des Feldes umgekehrter Polarität, veranlasst, aber ein den Schwellwert nicht erreichendes Zählergebnis den Feldgenerator (Co) zur Fortsetzung der Lieferung des Feldes bisheriger Polarität veranlasst.

17. Verfahren nach einem der Patentansprüche 14 bis 15, dadurch gekennzeichnet, dass

– der oder die, die Elektroden mit den Feldern beliefernde(n) Feldgenerator(en) Co, synchronisiert durch den Umpolungsbefehl, sowohl während der Pause (p) als auch während der Übertragung, jeweils in einem Speicher gespeicherte entsprechende digitale Wörter mittels eines Digital-Analogwandlers in entsprechende analoge, den Elektroden zugeleitete elektrische Steuerspannungen bzw. Potentiale, welche jeweils die richtig gepolten Felder mit richtiger Stärke erzeugen, umwandelt.

18. Verfahren nach Patentanspruch 15 und 17, dadurch gekennzeichnet, dass

– die Kennlinie des Wandlers, und/oder das betreffende jeweils erzeugende digitale Wort, während der Übertragung eines Blockes der mit Teilnehmerinformationen modulierten optischen Signale (inf), kontinuierlich oder weitgehend kontinuierlich, verändert wird.

19. Verfahren nach Patentanspruch 18, dadurch gekennzeichnet, dass

– mittels mindestens eines Kopplers bzw. Lichtempfängers, der an einen nicht durchgeschalteten Zweig des durchgeschalteten Verbindungsweges angekoppelt ist, die Stärke der an sich unerwünschten Ankoppelung dieses Zweiges an den Verbindungsweg gemessen wird, und

– diese gemessene Stärke der Ankopplung die Kennlinie des Wandlers und/oder das betreffende jeweils erzeugende digitale Wort ändert.

20. Verfahren nach Patentanspruch 17, 18 oder 19, dadurch gekennzeichnet, dass

– die gespeicherten digitalen Wörter, die während der Übertragung (inf) umgewandelt werden, abweichen von den gespeicherten digitalen Wörtern, die während der Pause (p) umgewandelt werden.

21. Verfahren nach einem der Patentansprüche 14 bis 20, dadurch gekennzeichnet, dass

– während der Pause (p) ebenfalls optische Signale (inf, os) über dieselben Verbindungswege, die während der Übertragung (os) durchgeschaltet sind, übertragen werden, – jedenfalls zumindest während eines Teils der Pause (p).

22. Verfahren nach einem der Patentansprüche 14 bis 21, dadurch gekennzeichnet, dass

– der Umpolungsbefehl (vb) durch einen kurzen Lichtblitz gebildet wird, der deutlich, z.B. fünffach, lichtstärker ist als die maximale Lichtstärke der mit Informationen modulierten optischen Signale (inf).

23. Verfahren nach Patentanspruch 22, dadurch gekennzeichnet, dass

– der Lichtblitz (vb) für die Hinumpolung eine andere Amplitude (vb') als der Lichtblitz (vb) für die Rückumpolung (Amplitude vb'') hat.

24. Verfahren nach Patentanspruch 22 oder 23, dadurch gekennzeichnet, dass

– dem Lichtblitz (vb) eine Erholungspause (ep) ohne mit Informationen modulierte optische Signale (inf) folgt.

25. Verfahren nach Patentanspruch 22, 23 oder 24, dadurch gekennzeichnet, dass

– der Lichtblitz (vb) durch einen besonderen Laser erzeugt und in die betreffende Anschluss-Lichtleitung (LL) des Koppelfeldes (KF) eingekoppelt wird.

26. Steueranordnung (Opt/El, Det, Co) für ein Verfahren nach einem der Patentansprüche 22 bis 25, dadurch gekennzeichnet, dass

– bei ihrem Eingang (Det) eine Schwellwertschaltung angebracht ist, die auf den Lichtblitz (vb) aber nicht auf die mit Informationen modulierten optischen Signale (inf) anspricht, so den Umpolungsbefehl (vb', vb'') von den sonstigen Signalen (inf) trennt und (mit vb''') den Feldgenerator (Co) zur Feldumpolung veranlast.

**Claims**

1. A control arrangement for controlling a light switch (LK), produced in integrated technology, for optical signals carried in a light conductor (LL, A–A', B–B') arranged on a first substrate (KF), consisting for example of GaAs or LiNbO$_3$ – e.g. for controlling a light switch (LK) designed as a directional coupler, with two light conductors (A–A', B–B') which are arranged in parallel to lie closely adjacent, along a coupling path to conduct either directly or cross-wise; where

– at least one electrically-controllable, electrically-conductive electrode (E11...E14) of the light switch (LK) is applied to the light conductor (LL) for the control of the light switch (LK) and

– under the control of the electric control potential (V1, V2) connected to the electrode, the light carried in the light conductor in question (LL, A–A') is switched – thus for example is fed through directly from the input of the light conductor to the output of the same light conductor (from A to A') or is cross-coupled, to exchange energy between the light conductors of the directional coupler (LK) (from A to B');

preferably but not exclusively for the control of a plurality of such light switches (LK) produced in integrated technology on one single first substrate (KF) to serve as crosspoints of a switching network with purely optical intermediate lines in a telephone exchange system;

characterised in that a D/A converter (D/A) whose analogue output voltage is stabilised in relation to d.c. voltage supply fluctuations is arranged in integrated technology on a second substrate (IS) consisting, for example, of Si or GaAs;

– the analogue output end of the converter (D/A) is connected to at least one electrode (via V1 to E11, E22, E13, E24) of the light switch (LK); and

– for the control of the light switch (LK) the digital input end of the converter (D/A) is connected to a byte generator (S1, S2, ZR) which contains at least one store (S1, S2, S3) and which during operation supplies words formed from digits.

2. A control arrangement as claimed in Claim 1, characterised in that

– the light switch (LK) is a directional coupler with light conductors (A–A', B–B') arranged in parallel and

– the byte generator contains two stores (S1, S2); of which

    – the first store (S1) stores words which correspond to the direct switch-through of the light conductor in question (from A to A') of the light switch (LK) and

    – the second store (S2) stores words which correspond to the cross-coupling to the other light conductor (from A to B') of this light switch (LK).

3. A control arrangement as claimed in Claim 2, characterised in that

– the byte generator also contains a third store (S3) which stores, for example in binary form, whether the first store (S1) or the second store (S2) is to supply a word to the digital input end of the converter (D/A) and

– the output of this third store (S3) is in each case connected to the control input of at least one selected switch (SW) interposed between the first store (S1) and the second store (S2) on the one hand and the digital input end of the converter (D/A) on the other hand.

4. A control arrangement as claimed in Claim 3, characterised in that

– a selector switch (SW) is provided for each parallel-transmitted digit of the word supplied from the first and/or second store (S1, S2) and

– between the selector switches (SW) and the digital input end of the converter (D/A) there is in each case interposed a storage cell of an intermediate register (ZR) which intermediately stores the word which controls the light switch (LK) during operation.

5. A control arrangement as claimed in one of the preceding Claims, characterised in that

– the analogue output end of the converter (D/A) is connected, via a plurality of intermediate switches (SZ) actuated in cyclic succession (at 100 kHz), to the electrodes of various light switches (LK) thus likewise driven in cyclic succession (at 100 kHz) and preferably arranged on one and the same, first substrate (KF).

6. A control arrangement as claimed in Claim 5, characterised in that the cyclic operation of the light switches (LK) achieved in this way, generally represents a refresh cycle which eliminates self-discharges of the electrodes (E11...E24) which have occurred since the last operation.

7. A control arrangement as claimed in one of the preceding Claims, with a plurality of light switches (LK) on the first substrate (KF), characterised in that

– for all the light switches (LK) on this first substrate (KF), the second control potential (V2) of the control voltages (V1/V2), which each control the light switches (LK), is a direct potential (V2) supplied via one single, common control input.

8. A control arrangement as claimed in one of Claims 1 to 6, characterised in that the second potential (V2) of the control voltages (V1, V2), which each control the light switch (ES) (LK), like the first control potential (V1), is produced by means of a word converted in a D/A-converter (D/A).

9. A control arrangement as claimed in one of the preceding Claims, characterised in that

– the first substrate (KF) and the second substrate (IS) form one single common substrate block,

– and thus the control arrangement – or at least a part of this control arrangement (ZR, D/A, RZ) – is arranged on the same substrate block (IS/KF) as the light conductors (LL) of the light switch (ES) (LK).

10. A control arrangement as claimed in Claim 9, characterised in that the substrate block (IS/KF) represents a fundamentally homogeneous body, produced for example on a GaAs base.

11. A control arrangement as claimed in Claim 9, characterised in that

– the substrate block (IS/KF) represents a fundamentally heterogeneous body in which the second substrate (IS), e.g. that consisting of Si, is applied by thin film technology to the first substrate (KF), e.g. that consisting of GaAs of LiNbO$_3$.

12. A control arrangement as claimed in Claim 11, characterised in that

– the first substrate (IS) is separated from the second substrate (KF) by a thin intermediate insulating layer which consists, for example, of SiO$_2$.

13. A method of adjusting the control arrangement as claimed in one of the preceding Claims, characterised in that

– the optimum potential (V1, V2) of the control voltage (V1/V2), at which the cross-talk and/or attenuation in the light switch (LK) in question is optimum, is in each case determined by varying the words supplied to the digital input end of the D/A converter (D/A) and

— the word which corresponds to the optimum is stored in the byte generator (S1, S2).

14. A method of controlling the opto-electronic crosspoints (S) of a switching system with intermediate lines (L) which transmit purely optical signal (os) and which represent light conductors, where these crosspoints (S)

— form light switches (S) produced by integrated circuit technology on a substrate (KF), consisting for example of GaAs or LiNbO₃, which

    — contain electrically-operable electrodes for the switching of the optical signals (os),

    — and serve for the purpose of producing an electric field so that the electrodes influence the light conductors (L) produced on the substrate (KF) by integrated circuit technology,

preferably but not exclusively for a telephone switching system, characterised in that

— the polarity of the field of at least a part of the electrodes is periodically reversed, e.g. after 100 ms, for the duration (tx) of an interval (p) e.g. of 10 ms, and

— at least in the case of all the crosspoints (S) of a switched-through connection path produced on the same substrate (KF), the polarity of the field is reversed approximately simultaneously, triggered by a polarity-reversal command (vb) which forms a timing mark and is modulated on to the optical signal (os).

15. A method as claimed in Claim 14, characterised in that part of the energy of the optical signal (os), e.g. 1%, is coupled out from the switched-through connection path (by means of RK),

— the transmitted, modulatable, optical signals (os) normally contain no special, marked sequences of digits, e.g. of purely 1-bits or 0-bits and

— such a sequence (vb) of digits, which are nevertheless output-coupled from the connection path, represents the polarity-reversal command (vb) which triggers the reversal of the polarity of the fields of the electrodes, at least on the substrate in question, (KF), along the connection path in question, for the duration (tx) of the pause (p), and

— the pause (p) in each case sub-divides the transmitted, optical signals, modulated with subscriber information (inf), into blocks of preferably equal duration (500 ms).

16. A method as claimed in Claim 15, characterised in that

— the optical signal (inf), modulated with subscriber information, is modulated in accordance with the HDB3-code,

— the polarity-reversal command is transmitted as a sequence of identical digits (vb) directly before the beginning of the pause (p),

— the output-coupled sequence (vb) is compared in a detector (Det) with the output signals of a synchronously-operated oscillator,

— the comparison result is counted in a counter of the detector (Det) and

— a counting result which exceeds a threshold value causes a field generator (Co) to change the polarity of the field, and thus to supply the reverse polarity field, whereas a counter result which does not reach the threshold value causes the field generator (Co) to continue to supply the field of the existing polarity.

17. A method as claimed in one of Claims 14 to 16, characterised in that the field generator(s) (Co), which supplies/supply the electrodes with the fields, synchronised by the polarity-reversal command, both during the pause (p) and during transmission, convert by means of a digital-analogue converter corresponding digital words stored in a store into corresponding analogue electrical control voltages or potentials which are fed to the electrodes and which each produce the fields of the correct polarity and of the correct strength.

18. A method as claimed in Claims 15 and 17, characterised in that the characteristic curve of the converter and/or the digital word to be produced is modified continuously or virtually continuously during the transmission of a block of the optical signals (inf) modulated with subscriber information.

19. A method as claimed in Claim 18, characterised in that

— at least one coupler or light receiver coupled to a non-switched-through arm of a switched-through connection path serves to measure the level of the inherently undesired coupling of this arm to the connection path and

— this measured level of coupling modifies the characteristic curve of the converter and/or the digital word which is to be produced.

20. A method as claimed in Claim 17, 18 or 19, characterised in that

— the stored digital words converted during the transmission (inf) differ from the stored digital words converted during the pause (p).

21. A method as claimed in one of Claims 14 to 20, characterised in that

— during at least part of the pause (p) optical signals (inf, os) are likewise transmitted via the connection paths switched through during the transmission (os).

22. A method as claimed in one of Claims 14 to 21, characterised in that

— the polarity-reversal command (vb) is formed by a short light flash noticeably stronger than the maximum light strength of the optical signals (inf) modulated with information, e.g. five times stronger.

23. A method as claimed in Claim 22, characterised in that

— the light flash (vb) has a different amplitude (vb′) for the forwards polarity reversal than the light flash (vb) for the backwards polarity reversal (amplitude vb″).

24. A method as claimed in Claim 22 or 23, characterised in that

– the light flash (vb) is followed by a recovery pause (ep) without optical signals (inf) modulated with information.

25. A method as claimed in Claim 22, 23 or 24, characterised in that

– the light flash (vb) is produced by a special laser and is input-coupled into the relevant connecting light conductor (LL) of the switching network (KF).

26. A control arrangement (Opt/El, Det, Co) for a method as claimed in one of Claims 22 to 25, characterised in that

– at its input (Det) there is arranged a threshold value circuit which responds to the light flash (vb) but not to the optical signals (inf) modulated with information, and which thus separates the polarity-reversal command (vb', vb'') from the other signals (inf) and causes the field generator (Co) to reverse the polarity of the field with vb'''.

**Revendications**

1. Dispositif de commande pour commander un commutateur de lumière (LK), fabriqué selon la technique intégrée, pour des signaux optiques guidés dans un guide de lumière (LL, A–A', B–B') disposé sur un premier substrat (KF), constitué par exemple en GaAs ou en LiNbO₃, – par exemple pour la commande d'un commutateur de lumière (LK) réalisé sous la forme d'un coupleur directionnel et comportant deux guides de lumiére (A–A', B–B') disposés en parallèle en étant étroitement voisins le long d'une voie de couplage et pouvant être interconnectés soit directement, soit en mode croisé, et dans lequel:

– au moins une électrode électriquement conductrice (E11...E14), pouvant être commandée électriquement, du commutateur de lumière (LK) est raccordée respectivement au le guide de lumière (LL) en vue de commander le commutateur de lumière (LK, et

– la lumiére, qui est guidée dans le guide de lumière (LL, A–A') concerné, est commutée en étant commandée par le potentiel électrique de commande (V1, V2) appliqué à l'électrode – c'est-à-dire par exemple qu'elle est transmise directement de l'entrée du guide de lumière à la sortie du même guide de lumière (de A vers A') ou bien est transmise en mode croisé, d'une manière permutée entre les guides de lumière du coupleur directionnel (LK) (de A vers B') – ;

par exemple pour la commande d'une multiplicité de tels guides de lumière (LK) fabriqués selon la technique intégrée sur un premier substrat unique (KF) et qui servent de points de couplage d'un champ de couplage comportant des lignes intermédiaires purement optiques, dans un système de commutation téléphonique, caractérisé en ce que:

– un convertisseur numérique/analogique (D/A), dont la tension de sortie analogique est stabilisée vis-à-vis de variations de l'alimentation en tension continue, est disposée selon la technique intégrée sur un second substrat (IS) constitué par exemple par du Si ou du GaAs,

– le côté de la sortie analogique du convertisseur (D/A) est relié à au moins une électrode (par l'intermédiaire de V1 appliqué à E11, E12, E13, E24) du commutateur de lumière (LK), et

– le côté de l'entrée numérique du convertisseur (D/A) est relié, pour la commande du commutateur de lumière (LK), à un générateur d'octets (S1, S2, ZR), qui contient au moins une mémoire (S1, S2, S3) et qui fournit, lors du fonctionnement, des mots formés de chiffres.

2. Dispositif de commande selon la revendication 1, caractérisé en ce que:

– le commutateur de lumière (LK) est un coupleur directionnel comportant des guides de lumière (A–A', B–B'), montés en parallèle et

– le générateur d'octets contient deux mémoires (S1, S2), parmi lesquelles:

– la première mémoire (S) mémorise des mots qui correspondent à l'interconnexion directe du guide de lumière concerné (de A vers A') du commutateur de lumière (LK), et

– la seconde mémoire (S2) mémorise des mots qui correspondent à l'interconnexion en mode croisé en direction de l'autre guide de lumière (de A vers B') du commutateur de lumière (LK).

3. Dispositif de commande suivant la revendication 2, caractérisé par le fait que:

– le générateur d'octets contient également une troisième mémoire (S3) dans laquelle se trouve mémorisé, par exemple sous forme binaire, le fait que la première mémoire (S1) ou la seconde mémoire (S2) doit délivrer un mot sur le côté de l'entrée numérique du convertisseur (D/A) et

– la sortie de cette troisième mémoire (S3) est raccordée respectivement à l'entrée de commande d'au moins un commutateur inverseur (SW) inséré entre d'une part la première mémoire (S1) et la seconde mémoire (S2) et d'autre part entre le côté de l'entrée numérique du convertisseur (D/A).

4. Dispositif de commande suivant la revendication 3, caractérisé par le fait que:

– pour chaque chiffre transmis en parallèle du mot respectif du mot délivré par la première et/ou la seconde mémoire (S1, S2), il est prévu un commutateur inverseur respectif (SW), et

– entre les commutateurs inverseurs (SW) et le côté de l'entrée numérique du convertisseur (D/A) se trouve insérée respectivement une cellule de mémoire d'un registre intermédiaire (ZR), qui, lors du fonctionnement, mémorise temporairement le mot commandant le commutateur de lumière (LK).

5. Dispositif de commande suivant l'une des revendications précédentes, caractérisé par le fait que:

– le côté de la sortie analogique du convertisseur (D/A) est relié par l'intermédiaire d'une multiplicité de commutateurs intermédiaires (SZ), actionnés successivement de façon cyclique (à 100 kHz), aux électrodes de différents commutateurs de lumière (LK) commandés de ce fait successivement et cycliquement de la même manière (à 100 kHz) et montés de préférence sur un même premier substrat (KF).

6. Dispositif de commande suivant la revendication 5, caractérisé par le fait que

– la commande cyclique, que l'on peut ainsi obtenir, des commutateurs de lumière (LK) représente en général un cycle de régénération, qui élimine des décharges autonomes des électrodes (E11...E24), qui sont apparue depuis la dernière commande.

7. Dispositif de commande suivant l'une des revendications précédentes, comportant une multiplicité de commutateurs de lumière (LK) sur un premier substrat (KF), caractérisé par le fait que:

– le second potentiel de commande (V2) des tensions de commande (V1/V2), qui commandent respectivement les commutateurs de lumière (LK), est un potentiel continu (V2) envoyé par l'intermédiaire d'une seule entrée commune de commande, pour tous les commutateurs de lumière (LK) situés sur ce premier substrat (KF).

8. Dispositif de commande suivant l'une des revendications 1 à 6, caractérisé par le fait que:

– le second potentiel de commande (V2) des tensions de commande (V1/V2), qui commandent respectivement le/les commutateurs de lumière (LK) est produit, de même que le premier potentiel de commande (V1) de ce commutateur, au moyen d'un mot envoyé dans un convertisseur numérique/analogique (D/A).

9. Dispositif de commande suivant l'une des revendications précédentes, caractérisé par le fait que:

– le premier substrat (KF) et le second substrat (IS) forment en commun un seul bloc de substrat,

– que par conséquent le dispositif de commande – ou au moins une partie de ce dispositif de commande (ZR, D/A, RZ) – est disposé sur le même bloc du substrat (IS/KF) que les conducteurs de lumière (LL) du commutateur de lumière/des commutateurs de lumière (LK).

10. Dispositif de commande suivant la revendication 9, caractérisé par le fait que:

– le bloc de substrat (IF/KF) représente un corps essentiellement homogène, fabriqué par exemple à base de GaAs.

11. Dispositif de commande suivant la revendication 9, caractérisé par le fait que:

– le bloc de substrat (IS/KF) représente un corps essentiellement hétérogène, dans lequel le second substrat (IS) formé par exemple avec du Si est déposé selon la technique à couches minces sur le premier substrat (KF) formé par exemple par du GaAs ou du $LiNbO_3$.

12. Dispositif de commande suivant la revendication 11, caractérisé par le fait que:

– le premier substrat (IS) est séparé du second substrat (KF) par une mince couche isolante intermédiaire, qui est formée par exemple par du $SiO_2$.

13. Procédé pour ajuster le dispositif de commande suivant l'une des revendications précédentes, caractérisé par le fait que:

– on détermine le potentiel respectif optimal (V1, V2) de la tension de commande (V1/V2), pour laquelle la diaphonie et/ou l'affaiblissement dans le guide de lumière (LK) considéré est optimal, en modifiant les mots envoyés au côté de l'entrée numérique du convertisseur numérique/analogique (D/A), et

– que le mot correspondant à l'optimum est mémorisé dans le générateur d'octets (S1, S2).

14. Procédé pour commander des points de couplage opto-électroniques (S) d'un système de commutation à l'aide de lignes intermédiaires (L) transmettant des signaux purement optiques (os) et représentant des guides de lumière, et selon lequel ces points de couplage (S)

– forment des commutateurs de lumière (S) fabriqués selon la technique intégrèe sur un substrat (KF), constitué par exemple par du GaAs ou du $LiNbO_3$, et qui

– contiennent des électrodes pouvant être commandées électriquement en vue de réaliser la commutation des signaux optiques (os), et

– agissent à cet effet avec les électrodes, au moyen d'un champ électrique, sur les guides de lumière (L) fabriqués selon la technique intégrée sur le substrat (F), par exemple pour un système de commutation téléphonique,

caractérisé par le fait que:

– la polarité du champ d'au moins une partie des électrodes est inversée de temps à autre, par exemple au bout de 100 ms, pendant la durée (tx) d'une pause de par exemple 10 ms, et

– la polarité du champ est inversée au moins d'une façon approximativement simultanée, au moins dans tous les points de couplage (S), fabriqués sur le même substrat (KF), d'une voie de liaison interconnectée ce sur la commande réalisée par un ordre d'inversion de polarité (vb) constituant un marquage temporel et modulant le signal optique (os).

15. Procédé suivant la revendication 14, caractérisé par le fait que:

– une partie de l'énergie (par exemple 1%) du signal optique (os) est extraite par découplage hors de la voie de liaison interconnectée (au moyen de RK),

– les signaux optiques modulables transmis (os) ne contiennent normalement aucune suite remarquable particulière de chiffres, par exemple uniquement de bits 1 ou de bits 0, et

– une telle suite (vb) de chiffres extraits cependant par découplage hors de la voie de liaison représente l'ordre d'inversion de polarité (vb) qui déclenche l'inversion de la polarité des champs des électrodes, au moins sur le substrat (KF) considéré, le long de la voie de liaison concernée, pendant la durée (tx) de la pause (p),

– la pause (p) subdivise respectivement les signaux optiques transmis, qui sont modulés par des informations d'abonnés (inf), en blocs possédant de préférence des durées respectivement identiques (500 ms).

16. Procédé suivant la revendication, caractérisé par le fait que:

– le signal optique (inf) modulé par des informations d'abonnés, est modulé selon le code HDB 3,

– l'ordre d'inversion de polarité est transmis sous la forme d'une suite de chiffres identiques (vb) directement avant le début de la pause (p),

– la suite (vb) extraite par découplage est comparée, dans un détecteur (Det), aux signaux de sortie d'un oscillateur fonctionnant de façon synchrone,

– le résultat de la comparaison est compté dans un compteur du détecteur (Det), et

– un résultat de comptage, dépassant une valeur de seuil, déclenche un générateur de champ (Co) pour qu'il inverse la polarité du champ, c'est-à-dire pour qu'il délivre le champ possédant une polarité inverse, mais qu'un résultat de comptage, n'atteignant pas la valeur de seuil, déclenche le générateur de champ (Co), pour qu'il continue à délivrer le champ possédant la polarité antérieure.

17. Procédé suivant l'une des revendications 14 à 16, caractérisé par le fait que

– le ou les générateurs de champ (Co), alimentant les électrodes avec les champs, convertit, d'une manière synchronisée par l'ordre d'inversion de polarité, des mots numériques correspondants mémorisés respectivement dans une mémoire, aussi bien pendant la pause (p) que pendant la transmission, à l'aide d'un convertisseur numérique/analogique en des tensions de commande ou potentiels électriques analogiques correspondants, envoyés aux électrodes et qui produisent respectivement les champs possédant une polarisation correcte et l'intensité correcte.

18. Procédé suivant les revendications 15 et 17, caractérisé par le fait que:

– la courbe caractéristique du transducteur et/ou le mot numérique considéré respectivement produit est modifié de façon continue ou dans une large mesure de façon continue pendant la transmission d'un bloc des signaux optiques (inf) modulés par des informations d'abonnés.

19. Procédé suivant la revendication 18, caractérisé par le fait que:

– à l'aide d'au moins un coupleur ou d'un récepteur de lumière, qui est accouplé à une branche non interconnectée de la voie de liaison interconnectée, on mesure l'intensité du couplage en soi indésirable de cette branche à la voie de liaison, et

– cette intensité mesurée du couplage modifie la courbe caractéristique du convertisseur et/ou du mot numérique considéré respectivement produit.

20. Procédé suivant la revendication 17, 18 ou 19, caractérisé par le fait que:

– les mots numériques mémorisés, qui sont convertis pendant la transmission (inf) diffèrent des mots numériques mémorisés qui sont convertis pendant la pause (p).

21. Procédé suivant l'une des revendications 14 à 20, caractérisé par le fait que

– pendant la pause (p), des signaux optiques (inf, os) sont également transmis par l'intermédiaire des voies de liaison qui sont interconnectées pendant la transmission (os),

– en tous cas au moins pendant une partie de la pause (p).

22. Procédé suivant l'une des revendications 14 à 21, caractérisé par le fait que:

– l'ordre d'inversion de polarité (vp) est formé par un bref éclair de lumière qui possède une intensité lumineuse nettement supérieure, par exemple quintuple, à l'intensité lumineuse maximum des signaux optiques (inf) modulés par des informations.

23. Procédé suivant la revendication 22, caractérisé par le fait que:

– l'éclair de lumière (vb) possède, pour l'inversion de polarité dans le sens aller une autre amplitude (vb') que l'éclair de lumière (vb) pour l'inversion de polarité dans le sens retour (amplitude vb '').

24. Procédé suivant la revendication 22 ou 23 caractérisé par le fait que:

– une pause de régénération (ep) sans signaux optiques (inf) modulés par des informations succède à l'éclair de lumière (vb).

25. Procédé suivant la revendication 22, 23 ou 24, caractérisé par le fait que:

– l'éclair de lumière (vb) est produit par un laser particulier et est injecté par couplage dans le guide de lumière de raccordement considéré (LL) du champ de couplage (KF).

26. Dispositif de commande (Opt/El, Det, Co) pour un procédé suivant l'une des revendications 22 à 25, caractérisé par le fait que:

– à son entrée (Det) se trouve raccordé un circuit à valeur de seuil, qui répond à l'éclair de lumière (vb), mais pas aux signaux optiques (inf) modulés par des informations, sépare par conséquent l'ordre d'inversion de polarité (vb', vb'') des autres signaux (inf) et déclenche (avec vb''') le générateur de champ (Co) pour réaliser l'inversion de la polarité du champ.

FIG 1

FIG 2

FIG 3

# FIG 4

# FIG 5